# EUROPEAN PATENT APPLICATION

(11) **EP 4 827 225 A1**
(43) Date of publication of application: **21.10.2026**
(21) Application number: 26172231.8
(22) Date of filing: 14.04.2026
(51) Int. Cl.: H04W 74/00, H04L 5/00, H04W 84/12

(54) **SWITCHING CRITERIA FOR NON-PRIMARY CHANNEL ACCESS**

(30) Priority: 17.04.2025 US 202519182007
(71) Applicant: Nokia Technologies Oy, 02610 Espoo (FI)
(72) Inventor: TALARICO, Salvatore, Sunnyvale (US)
(74) Representative: Nokia EPO representatives

(57) **Abstract**

An apparatus, method, and computer program product are provided for switching from a Basic Service Set (BSS) primary channel to a Non-Primary Channel Access (NPCA) primary channel for communicating with an Access Point (AP); and in response to at least one condition for switching back to the BSS primary channel being satisfied, switching from the NPCA primary channel to the BSS primary channel for communicating with the AP. Additionally, an apparatus, method, and computer program product are provided for switching from a BSS primary channel to an NPCA primary channel, the NPCA primary channel associated with a mode of operation in which untriggered uplink (UL) transmission is not enabled; and receiving, from the AP via the NPCA primary channel, an initial control frame (ICF) comprising a field indicating an NPCA duration that defines a minimum duration until switching from the NPCA primary channel to the BSS primary channel must occur.

## Description

### TECHNOLOGICAL FIELD

Various example embodiments relate generally to wireless communication networks such as Wi-Fi in which latency sensitive applications may be employed.

### BACKGROUND

Some applications of wireless technology rely on low-latency. For example, a communications system may rely on providing low latency for stations (STAs) running latency-sensitive applications, such as virtual reality, mixed reality, augmented reality, or the like.

### BRIEF SUMMARY

An apparatus, method and computer program product are provided for switching from a Non-Primary Channel Access (NPCA) primary channel to a Basic Service Set (BSS) primary channel.

According to an aspect of the present disclosure, there is provided an apparatus including at least one processor and at least one memory storing instructions that, when executed by the at least one processor, cause the apparatus to perform at least: switching from a Basic Service Set (BSS) primary channel to a Non-Primary Channel Access (NPCA) primary channel for communicating with an Access Point (AP), where the NPCA primary channel is associated with a mode of operation in which untriggered uplink (UL) transmission is not enabled; and receiving, from the AP via the NPCA primary channel, an initial control frame (ICF) including a field indicating an NPCA duration that defines a minimum duration until switching from the NPCA primary channel to the BSS primary channel must occur.

According to some embodiments, the NPCA duration is equivalent to an Overlapping BSS (OBSS) Basic Network Allocation Vector (NAV) duration of an OBSS transmission that caused the switching from the BSS primary channel to the NPCA primary channel. In this embodiment, the OBSS Basic NAV duration is signaled (i) via a list or array including OBSS Basic NAV durations for each of one or more OBSSs transmissions overlapping with the BSS primary channel, (ii) via a single value corresponding to a maximum OBSS Basic NAV duration of one or more OBSS Basic NAV durations of a respective one or more OBSS transmissions that overlap the BSS primary channel, or (iii) in association with a BSS color relative to the OBSS Basic NAV duration.

According to some embodiments, the NPCA duration is equivalent to a duration of a Physical Protocol Data Unit (PPDU) of an OBSS transmission that caused the switching from the BSS primary channel to the NPCA primary channel. In this embodiment, the duration of the PPDU is signaled (i) via a list or array including durations of PPDUs of each of one or more OBSS transmissions overlapping with the BSS primary channel, (ii) via a single value corresponding to a maximum duration of one or more durations of PPDUs of each of one or more OBSS transmissions that overlap the BSS primary channel, or (iii) in association with a BSS color relative to the duration of the PPDU.

According to some embodiments, the NPCA duration is equivalent to a transmission opportunity (TXOP) duration that the AP is configured to reserve on the NPCA primary channel. In some embodiments, the NPCA duration is required to satisfy at least one of the following conditions: (i) the NPCA duration is less than or equivalent to an OBSS Basic NAV duration or a duration of a PPDU of an OBSS transmission that caused the switching from the BSS primary channel to the NPCA primary channel (ii) greater than or equivalent to a duration long enough to allow a Block Ack (BA) transmission for one or more PPDUs configured for transmission, or (iii) greater than or equivalent to a duration long enough to allow a TXOP return transmission, where the AP is operating Code-Time Division Multiple Access (C-TDMA) jointly with the NPCA.

According to some embodiments, the NPCA duration is equivalent to a duration of a service period in which a station (STA) is configured to acquire a TXOP and transmit for unrestricted and restricted target wake time (TWT). The apparatus of some embodiments is also caused to perform switching from the NPCA primary channel to the BSS primary channel based at least in part on a mode of operation associated with the NPCA. The apparatus of some embodiments is also caused to perform switching from the NPCA primary channel to the BSS primary channel based at least in part on the NPCA duration.

According to some embodiments, switching from the NPCA primary channel to the BSS primary channel based at least in part on the NPCA duration includes switching from the NPCA primary channel to the BSS primary channel (i) when or after the NPCA duration expires, or (ii) when or after a duration including the NPCA duration and an NPCA-Switching-Back-Delay duration expires. In this embodiment, the NPCA duration is (i) an individual NPCA duration, or (ii) a greatest NPCA duration among a plurality of NPCA durations.

The apparatus of some embodiments is also caused to perform transmitting, to the AP, an initial control response (ICR) frame including a field indicating an NPCA duration determined by the apparatus. In some embodiments, both the ICF and ICR include a field indicating an NPCA duration and the apparatus is configured to use the NPCA duration received within the ICF. In some embodiments, both the ICF and ICR include a field indicating an NPCA duration and the apparatus is configured to use a greatest NPCA duration among the NPCA duration within the ICF and the NPCA duration within the ICR. In some embodiments, both the ICF and ICR include a field indicating an NPCA duration and the apparatus is configured to use the NPCA duration received within the ICF in an instance in which the NPCA duration received within the ICF is less than or the same as the NPCA duration determined by the apparatus. According to some embodiments, the NPCA duration is based at least in part on an NPCA mode of operation. In some embodiments, the apparatus is a non-AP STA.

According to another aspect of the present disclosure, there is provided a method including: switching, via an apparatus, from a Basic Service Set (BSS) primary channel to a Non-Primary Channel Access (NPCA) primary channel for communicating with an Access Point (AP), where the NPCA primary channel is associated with a mode of operation in which untriggered uplink (UL) transmission is not enabled; and receiving, via the apparatus and from the AP via the NPCA primary channel, an initial control frame (ICF) including a field indicating an NPCA duration that defines a minimum duration until switching from the NPCA primary channel to the BSS primary channel must occur.

According to some embodiments, the NPCA duration is equivalent to an Overlapping BSS (OBSS) Basic Network Allocation Vector (NAV) duration of an OBSS transmission that caused the switching from the BSS primary channel to the NPCA primary channel. In this embodiment, the OBSS Basic NAV duration is signaled (i) via a list or array including OBSS Basic NAV durations for each of one or more OBSSs transmissions overlapping with the BSS primary channel, (ii) via a single value corresponding to a maximum OBSS Basic NAV duration of one or more OBSS Basic NAV durations of a respective one or more OBSS transmissions that overlap the BSS primary channel, or (iii) in association with a BSS color relative to the OBSS Basic NAV duration.

According to some embodiments, the NPCA duration is equivalent to a duration of a Physical Protocol Data Unit (PPDU) of an OBSS transmission that caused the switching from the BSS primary channel to the NPCA primary channel. In this embodiment, the duration of the PPDU is signaled (i) via a list or array including durations of PPDUs of each of one or more OBSS transmissions overlapping with the BSS primary channel, (ii) via a single value corresponding to a maximum duration of one or more durations of PPDUs of each of one or more OBSS transmissions that overlap the BSS primary channel, or (iii) in association with a BSS color relative to the duration of the PPDU.

According to some embodiments, the NPCA duration is equivalent to a transmission opportunity (TXOP) duration that the AP is configured to reserve on the NPCA primary channel. In some embodiments, the NPCA duration is required to satisfy at least one of the following conditions: (i) the NPCA duration is less than or equivalent to an OBSS Basic NAV duration or a duration of a PPDU of an OBSS transmission that caused the switching from the BSS primary channel to the NPCA primary channel (ii) greater than or equivalent to a duration long enough to allow a Block Ack (BA) transmission for one or more PPDUs configured for transmission, or (iii) greater than or equivalent to a duration long enough to allow a TXOP return transmission, where the AP is operating Code-Time Division Multiple Access (C-TDMA) jointly with the NPCA.

According to some embodiments, the NPCA duration is equivalent to a duration of a service period in which a station (STA) is configured to acquire a TXOP and transmit for unrestricted and restricted target wake time (TWT). The method of some embodiments further includes switching from the NPCA primary channel to the BSS primary channel based at least in part on a mode of operation associated with the NPCA. The method of some embodiments further includes switching from the NPCA primary channel to the BSS primary channel based at least in part on the NPCA duration.

According to some embodiments, switching from the NPCA primary channel to the BSS primary channel based at least in part on the NPCA duration includes switching from the NPCA primary channel to the BSS primary channel (i) when or after the NPCA duration expires, or (ii) when or after a duration including the NPCA duration and an NPCA-Switching-Back-Delay duration expires. In this embodiment, the NPCA duration is (i) an individual NPCA duration, or (ii) a greatest NPCA duration among a plurality of NPCA durations.

The method of some embodiments further includes transmitting, to the AP, an initial control response (ICR) frame including a field indicating an NPCA duration determined by the apparatus. In some embodiments, both the ICF and ICR include a field indicating an NPCA duration and the apparatus is configured to use the NPCA duration received within the ICF. In some embodiments, both the ICF and ICR include a field indicating an NPCA duration and the apparatus is configured to use a greatest NPCA duration among the NPCA duration within the ICF and the NPCA duration within the ICR. In some embodiments, both the ICF and ICR include a field indicating an NPCA duration and the apparatus is configured to use the NPCA duration received within the ICF in an instance in which the NPCA duration received within the ICF is less than or the same as the NPCA duration determined by the apparatus. According to some embodiments, the NPCA duration is based at least in part on an NPCA mode of operation. In some embodiments, the apparatus is a non-AP STA.

According to another aspect of the present disclosure, there is provided a computer program product, including at least one non-transitory computer-readable storage medium having computer-executable program code portions stored therein with the computer-executable program code portions including program code instructions configured to: switch, via an apparatus, from a Basic Service Set (BSS) primary channel to a Non-Primary Channel Access (NPCA) primary channel for communicating with an Access Point (AP), where the NPCA primary channel is associated with a mode of operation in which untriggered uplink (UL) transmission is not enabled; and receive, via the apparatus and from the AP via the NPCA primary channel, an initial control frame (ICF) including a field indicating an NPCA duration that defines a minimum duration until switching from the NPCA primary channel to the BSS primary channel must occur.

According to some embodiments, the NPCA duration is equivalent to an Overlapping BSS (OBSS) Basic Network Allocation Vector (NAV) duration of an OBSS transmission that caused the switching from the BSS primary channel to the NPCA primary channel. In this embodiment, the OBSS Basic NAV duration is signaled (i) via a list or array including OBSS Basic NAV durations for each of one or more OBSSs transmissions overlapping with the BSS primary channel, (ii) via a single value corresponding to a maximum OBSS Basic NAV duration of one or more OBSS Basic NAV durations of a respective one or more OBSS transmissions that overlap the BSS primary channel, or (iii) in association with a BSS color relative to the OBSS Basic NAV duration.

According to some embodiments, the NPCA duration is equivalent to a duration of a Physical Protocol Data Unit (PPDU) of an OBSS transmission that caused the switching from the BSS primary channel to the NPCA primary channel. In this embodiment, the duration of the PPDU is signaled (i) via a list or array including durations of PPDUs of each of one or more OBSS transmissions overlapping with the BSS primary channel, (ii) via a single value corresponding to a maximum duration of one or more durations of PPDUs of each of one or more OBSS transmissions that overlap the BSS primary channel, or (iii) in association with a BSS color relative to the duration of the PPDU.

According to some embodiments, the NPCA duration is equivalent to a transmission opportunity (TXOP) duration that the AP is configured to reserve on the NPCA primary channel. In some embodiments, the NPCA duration is required to satisfy at least one of the following conditions: (i) the NPCA duration is less than or equivalent to an OBSS Basic NAV duration or a duration of a PPDU of an OBSS transmission that caused the switching from the BSS primary channel to the NPCA primary channel (ii) greater than or equivalent to a duration long enough to allow a Block Ack (BA) transmission for one or more PPDUs configured for transmission, or (iii) greater than or equivalent to a duration long enough to allow a TXOP return transmission, where the AP is operating Code-Time Division Multiple Access (C-TDMA) jointly with the NPCA.

According to some embodiments, the NPCA duration is equivalent to a duration of a service period in which a station (STA) is configured to acquire a TXOP and transmit for unrestricted and restricted target wake time (TWT). According to some embodiments, the computer-executable program code portions include program code instructions configured to switch from the NPCA primary channel to the BSS primary channel based at least in part on a mode of operation associated with the NPCA. According to some embodiments, the computer-executable program code portions include program code instructions configured to switch from the NPCA primary channel to the BSS primary channel based at least in part on the NPCA duration.

According to some embodiments, switching from the NPCA primary channel to the BSS primary channel based at least in part on the NPCA duration includes switching from the NPCA primary channel to the BSS primary channel (i) when or after the NPCA duration expires, or (ii) when or after a duration including the NPCA duration and an NPCA-Switching-Back-Delay duration expires. In this embodiment, the NPCA duration is (i) an individual NPCA duration, or (ii) a greatest NPCA duration among a plurality of NPCA durations.

According to some embodiments, the computer-executable program code portions include program code instructions configured to transmit, to the AP, an initial control response (ICR) frame including a field indicating an NPCA duration determined by the apparatus. In some embodiments, both the ICF and ICR include a field indicating an NPCA duration and the apparatus is configured to use the NPCA duration received within the ICF. In some embodiments, both the ICF and ICR include a field indicating an NPCA duration and the apparatus is configured to use a greatest NPCA duration among the NPCA duration within the ICF and the NPCA duration within the ICR. In some embodiments, both the ICF and ICR include a field indicating an NPCA duration and the apparatus is configured to use the NPCA duration received within the ICF in an instance in which the NPCA duration received within the ICF is less than or the same as the NPCA duration determined by the apparatus. According to some embodiments, the NPCA duration is based at least in part on an NPCA mode of operation. In some embodiments, the apparatus is a non-AP STA.

According to another aspect of the present disclosure, there is provided an apparatus, including means for: switching from a Basic Service Set (BSS) primary channel to a Non-Primary Channel Access (NPCA) primary channel for communicating with an Access Point (AP), where the NPCA primary channel is associated with a mode of operation in which untriggered uplink (UL) transmission is not enabled; and receiving, from the AP via the NPCA primary channel, an initial control frame (ICF) including a field indicating an NPCA duration that defines a minimum duration until switching from the NPCA primary channel to the BSS primary channel must occur.

According to some embodiments, the NPCA duration is equivalent to an Overlapping BSS (OBSS) Basic Network Allocation Vector (NAV) duration of an OBSS transmission that caused the switching from the BSS primary channel to the NPCA primary channel. In this embodiment, the OBSS Basic NAV duration is signaled (i) via a list or array including OBSS Basic NAV durations for each of one or more OBSSs transmissions overlapping with the BSS primary channel, (ii) via a single value corresponding to a maximum OBSS Basic NAV duration of one or more OBSS Basic NAV durations of a respective one or more OBSS transmissions that overlap the BSS primary channel, or (iii) in association with a BSS color relative to the OBSS Basic NAV duration.

According to some embodiments, the NPCA duration is equivalent to a duration of a Physical Protocol Data Unit (PPDU) of an OBSS transmission that caused the switching from the BSS primary channel to the NPCA primary channel. In this embodiment, the duration of the PPDU is signaled (i) via a list or array including durations of PPDUs of each of one or more OBSS transmissions overlapping with the BSS primary channel, (ii) via a single value corresponding to a maximum duration of one or more durations of PPDUs of each of one or more OBSS transmissions that overlap the BSS primary channel, or (iii) in association with a BSS color relative to the duration of the PPDU.

According to some embodiments, the NPCA duration is equivalent to a transmission opportunity (TXOP) duration that the AP is configured to reserve on the NPCA primary channel. In some embodiments, the NPCA duration is required to satisfy at least one of the following conditions: (i) the NPCA duration is less than or equivalent to an OBSS Basic NAV duration or a duration of a PPDU of an OBSS transmission that caused the switching from the BSS primary channel to the NPCA primary channel (ii) greater than or equivalent to a duration long enough to allow a Block Ack (BA) transmission for one or more PPDUs configured for transmission, or (iii) greater than or equivalent to a duration long enough to allow a TXOP return transmission, where the AP is operating Code-Time Division Multiple Access (C-TDMA) jointly with the NPCA.

According to some embodiments, the NPCA duration is equivalent to a duration of a service period in which a station (STA) is configured to acquire a TXOP and transmit for unrestricted and restricted target wake time (TWT). The apparatus of some embodiments also includes means for switching from the NPCA primary channel to the BSS primary channel based at least in part on a mode of operation associated with the NPCA. The apparatus of some embodiments also includes means for switching from the NPCA primary channel to the BSS primary channel based at least in part on the NPCA duration.

According to some embodiments, switching from the NPCA primary channel to the BSS primary channel based at least in part on the NPCA duration includes switching from the NPCA primary channel to the BSS primary channel (i) when or after the NPCA duration expires, or (ii) when or after a duration including the NPCA duration and an NPCA-Switching-Back-Delay duration expires. In this embodiment, the NPCA duration is (i) an individual NPCA duration, or (ii) a greatest NPCA duration among a plurality of NPCA durations.

The apparatus of some embodiments also includes means for transmitting, to the AP, an initial control response (ICR) frame including a field indicating an NPCA duration determined by the apparatus. In some embodiments, both the ICF and ICR include a field indicating an NPCA duration and the apparatus is configured to use the NPCA duration received within the ICF. In some embodiments, both the ICF and ICR include a field indicating an NPCA duration and the apparatus is configured to use a greatest NPCA duration among the NPCA duration within the ICF and the NPCA duration within the ICR. In some embodiments, both the ICF and ICR include a field indicating an NPCA duration and the apparatus is configured to use the NPCA duration received within the ICF in an instance in which the NPCA duration received within the ICF is less than or the same as the NPCA duration determined by the apparatus. According to some embodiments, the NPCA duration is based at least in part on an NPCA mode of operation. In some embodiments, the apparatus is a non-AP STA.

According to an aspect of the present disclosure, there is provided an apparatus including at least one processor and at least one memory storing instructions that, when executed by the at least one processor, cause the apparatus to perform at least: switching from a Basic Service Set (BSS) primary channel to a Non-Primary Channel Access (NPCA) primary channel for communicating with a station (STA), where the NPCA primary channel is associated with a mode of operation in which untriggered uplink (UL) transmission is not enabled; transmitting, to the STA via the NPCA primary channel, an initial control frame (ICF) including a field indicating an NPCA duration that defines a minimum duration until switching from the NPCA primary channel to the BSS primary channel must occur; and switching, based on the NPCA duration, from the NPCA primary channel to the BSS primary channel for communicating with the STA.

According to some embodiments, in a case where the apparatus does not receive an initial control response (ICR) frame from the STA, the apparatus is also caused to perform determining the STA is unavailable for communication during at least a duration corresponding to the NPCA duration. In some embodiments, the apparatus is an Access Point (AP).

According to another aspect of the present disclosure, there is provided a method including: switching, via an apparatus, from a Basic Service Set (BSS) primary channel to a Non-Primary Channel Access (NPCA) primary channel for communicating with a station (STA), where the NPCA primary channel is associated with a mode of operation in which untriggered uplink (UL) transmission is not enabled; transmitting, via the apparatus and to the STA via the NPCA primary channel, an initial control frame (ICF) including a field indicating an NPCA duration that defines a minimum duration until switching from the NPCA primary channel to the BSS primary channel must occur; and switching, via the apparatus and based on the NPCA duration, from the NPCA primary channel to the BSS primary channel for communicating with the STA.

According to some embodiments, in a case where the apparatus does not receive an initial control response (ICR) frame from the STA, the method further includes determining the STA is unavailable for communication during at least a duration corresponding to the NPCA duration. In some embodiments, the apparatus is an Access Point (AP).

According to another aspect of the present disclosure, there is provided a computer program product, including at least one non-transitory computer-readable storage medium having computer-executable program code portions stored therein with the computer-executable program code portions including program code instructions configured to: switch, via an apparatus, from a Basic Service Set (BSS) primary channel to a Non-Primary Channel Access (NPCA) primary channel for communicating with a station (STA), where the NPCA primary channel is associated with a mode of operation in which untriggered uplink (UL) transmission is not enabled; transmit, via the apparatus and to the STA via the NPCA primary channel, an initial control frame (ICF) including a field indicating an NPCA duration that defines a minimum duration until switching from the NPCA primary channel to the BSS primary channel must occur; and switch, via the apparatus and based on the NPCA duration, from the NPCA primary channel to the BSS primary channel for communicating with the STA.

According to some embodiments, in a case where an apparatus does not receive an initial control response (ICR) frame from the STA, the computer-executable program code portions include program code instructions configured to determine the STA is unavailable for communication during at least a duration corresponding to the NPCA duration. In some embodiments, the apparatus is an Access Point (AP).

According to another aspect of the present disclosure, there is provided an apparatus, including means for: switching from a Basic Service Set (BSS) primary channel to a Non-Primary Channel Access (NPCA) primary channel for communicating with a station (STA), where the NPCA primary channel is associated with a mode of operation in which untriggered uplink (UL) transmission is not enabled; transmitting, to the STA via the NPCA primary channel, an initial control frame (ICF) including a field indicating an NPCA duration that defines a minimum duration until switching from the NPCA primary channel to the BSS primary channel must occur; and switching, based on the NPCA duration, from the NPCA primary channel to the BSS primary channel for communicating with the STA.

According to some embodiments, in a case where the apparatus does not receive an initial control response (ICR) frame from the STA, the apparatus also includes means for determining the STA is unavailable for communication during at least a duration corresponding to the NPCA duration. In some embodiments, the apparatus is an Access Point (AP).

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 is a diagram of an example communication system in accordance some example embodiments described herein;
Figure 2 illustrates an example of NPCA in accordance with some example embodiments described herein;
Figure 3A illustrates an example environment in accordance with some example embodiments described herein;
Figure 3B illustrates an example time-frequency domain in accordance with some example embodiments described herein;
Figure 4 illustrates an example flowchart in accordance with some example embodiments described herein;
Figure 5 illustrates the operations performed, such as by the apparatus of Figure 10, in accordance with at least an example embodiment;
Figure 6 illustrates the operations performed, such as by the apparatus of Figure 10, in accordance with at least an example embodiment;
Figure 7 illustrates the operations performed, such as by the apparatus of Figure 10, in accordance with at least an example embodiment;
Figure 8 illustrates the operations performed, such as by the apparatus of Figure 10, in accordance with at least an example embodiment;
Figure 9 illustrates the operations performed, such as by the apparatus of Figure 10, in accordance with at least an example embodiment;
Figure 10 illustrates the operations performed, such as by the apparatus of Figure 10, in accordance with at least an example embodiment; and
Figure 11 is a block diagram of an apparatus that may be specifically configured in accordance with an example embodiment of the present disclosure.

### DETAILED DESCRIPTION

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Certain embodiments described may be implemented in a communications system (e.g., a communication network), such as any of the following radio access technologies (RATs): wireless fidelity (Wi-Fi), BLUETOOTH, Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunications system (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future radio access technology (RAT) such as 6G. Moreover, communication within the communication network may utilize any suitable wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiplexing (OFDM), and/or Discrete Fourier Transform spread OFDM (DFT-s-OFDM).

The term "terminal device" refers to any end device that may be capable of wireless communication. By way of example, a terminal device may be referred to as a communication device, user equipment (UE), a Subscriber Station (SS), a Mobile Station (MS). The terminal device may include a mobile phone, a cellular phone, a smart phone, voice over IP (VoIP) phones, wireless local loop phones, a tablet, a wearable terminal device, a personal digital assistant (PDA), portable computers, desktop computers, image capture terminal devices such as digital cameras, gaming terminal devices, music storage and playback appliances, vehicle-mounted wireless terminal devices, universal serial bus (USB) USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

The term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving respectively via a wireless propagation channel on radio resources.

In some examples, a communications system may be deployed in a wireless local area network (WLAN), such as a Wi-Fi network. That is, in some examples, a communications system may be an example of a WLAN system. The WLAN system may support wireless communications between one or more communications devices in accordance with one or more Wi-Fi protocols, such as protocols based on institute of electrical and electronics engineers (IEEE) 802.11 standards and/or related drafts, such as 802.11-2020, 802.11ac, 802.11ax, 802.11be, 802.11bn, and/or others.

In some examples, Wi-Fi communications may occur via one or more radio frequency bands, such as 2.4 gigahertz (GHz), 3.6 GHz, 5 GHz, 6 GHz, 60 GHz, and/or the like. In some such examples, each radio frequency band may support one or more channels (e.g., 20 megahertz (MHz) channels) over which data may be communicated. In some examples, multiple devices may use multiple channels to communicate over the WLAN simultaneously.

A WLAN system may include one or more communications devices, such as an access point (AP) and/or a station (STA), which is also referred to herein as a non-AP STA. For example, a device configured to support one or more Wi-Fi protocols may be an example of an AP (e.g., may operate in accordance with an AP mode) and/or may be an example of a non-AP STA (e.g., may operate in accordance with a non-AP STA mode). In some examples, an AP may control Wi-Fi communications for one or more non-AP STAs. For example, an AP may be (or may be connected to) a central entity used to establish (and/or control) one or more connections between one or more STAs and another network (e.g., the Internet). In other words, in some examples, the AP may connect a wired network (e.g., the Internet) to a wireless network (e.g., the WLAN). In some instances, a Wi-Fi network may be identified via one or more identifiers, such as a service set identifier (SSID) or a basic service set identifier (BSSID).

In some examples, an AP of a WLAN system includes at least one distribution system access function configured to facilitate data communication beyond the AP. Additionally, or alternatively, STAs may be configured to be end devices, which rely on association with an AP to communicate with devices other than the AP. An AP may be configured to connect to a wired local area network (LAN) (e.g., via Ethernet). The AP may allow one or more client devices (e.g., STAs) to access wireless connections via WLAN. The client devices may also be referred to as "WLAN clients". WLAN clients may comprise various devices and/or types of devices, including laptops, tablets, cell phones, and/or other devices.

A WLAN system may support one or more architectures (types of logical relationships between devices). For example, a WLAN system may support an autonomous
architecture, a centralized architecture, a cooperative architecture, and/or other types of architectures. In some examples of an autonomous architecture, APs are stand-alone APs configured with features and capabilities to operate without any reliance on another device. In some examples of a centralized architecture, a centralized network manager may regulate the operation of the WLAN. In other words, the network manager may be the AP or may be connected to one or more APs within the WLAN. For example, APs may be connected (e.g., wirelessly and/or via a wired connection) to a central entity, which may be configured to act as a network manager. In some examples, the network manager is a cloud-based entity, which may reside either in a private cloud or in a public cloud. In some examples of a cooperative architecture (also referred to as a network manager-less or controller-less architecture), a virtual management (e.g., cloud-based) system may be used to control a WLAN. For example, the virtual management system may employ a cooperative communication method between one or more APs to control the WLAN. In other examples, a centralized network manager may use a wireless system to provide local connection to clients (e.g., STAs). For example, the centralized network manager may be a controller configured to perform operations related to authentication, authorization, accounting (e.g., via an authentication, authorizing, and accounting (AAA) server), and/or other operations.

Additionally, or alternatively, a WLAN system may support one or more topologies (types of physical connections between various devices within the WLAN system). For example, the WLAN system may support an infrastructure topology which may include a combination of wired and wireless connections. In some examples of an infrastructure topology, the infrastructure topology may include one or more wired devices with a wired connection to a network (e.g., one or more APs that are each connected via a cable to a switch) and the one or more wired devices may support one or more wireless connections to one or more wireless devices (e.g., laptops, tablets, cell phones), such that the wireless devices may connect wirelessly to the network. In other words, the one or more wired devices may serve as a bridge between the wireless network and the wired network. Additionally, or alternatively, the WLAN system may support an ad hoc topology, which does not rely on infrastructure (e.g., cables, routers, servers, or APs). In some examples of an ad hoc network, one or more STAs (also referred to as clients or client devices) may wirelessly connect to other devices in a peer-to-peer network. Additionally, or alternatively, the WLAN system may support a mesh topology in which multiple network devices are interconnected with each other via wireless connections. For example, in accordance with a mesh topology, an AP (e.g., each AP), which may support one or more wireless connections with one or more STAs, may communicate wirelessly with one or more other APs.

In accordance with one or more Wi-Fi protocols, data may be transmitted wirelessly between two devices (e.g., an AP and a STA) via packets, referred to as protocol data units (PDUs). In other words, Wi-Fi communications may include transmission and reception of one or more PDUs. For example, data may be communicated via a frame (e.g., a medium access control (MAC) frame), which may include one or more PDUs. In some instances, multiple frames may include the same PDU. In some examples, a PDU may include data (referred to as a payload), as well as one or more headers (e.g., a sequence of one or more fields) and/or one or more trailers (e.g., a sequence of bits appended to the PDU, after the payload). In some examples, the data included in the PDU, may be user data, control data, management data, and/or other types of data. In some examples, frames may include data type frames, control type frames, management type frames, and/or other types of frames. At least one frame type (e.g., each frame type) may be included in a PDU, wherein a payload of a PDU may comprise user data, control data, management data, and/or other data. In some examples, a WLAN system may implement one or more security protocols to protect the confidentiality, integrity, and availability of Wi-Fi communications.

In some examples, a WLAN system may support transmission opportunities (TXOPs) to increase throughput, such as for high priority data, by providing contention-free channel access for a period of time. A TXOP may be available in a quality of service (QoS) mode as part of Enhanced Distributed Channel Access (EDCA), and/or may be a limited time period of contention-free channel access available to the channel-owning station (e.g., the TXOP holder). During such a period a TXOP holder, which may be a STA or an AP, may send multiple frames that satisfy criteria, which may have been determined for the use of TXOP. In some examples, the criteria may allow transmission of frames belonging to an access category (AC) other than the AC for which the TXOP has been obtained. In some examples, a TXOP may increase throughput and/or reduce delay of QoS data frames by eliminating contention periods between transmissions. In some examples, a TXOP may be used in combination with frame aggregation and block acknowledgement to further increase throughput.

In some examples, access categories have different channel access parameters, such as Arbitration Interframe Spacing (AIFS), duration, contention window size, and TXOP limit. In some examples, values of these parameters may be set in a manner that increases a likelihood of higher priority packets being prioritized over lower priority packets. For example, the values of the parameters may be set that a STA (typically) waits for a shorter duration before sending the higher priority packets compared to a duration that the STA may wait before sending the lower priority packets. Additionally, or alternatively, the values of the parameters may be set so that the contention window for higher priority packets is smaller than that of lower priority packets and/or so that multiple packets may be sent in a TXOP. In some examples, a TXOP holder, which may be either a STA or an AP, may send frames to multiple recipients during a TXOP. In addition to QoS data frames, other frames may be exchanged during the TXOP, such as an acknowledgement (ACK), BlockAckReq/BlockAck frames, and/or other control and management frames.

In some examples, a WLAN system uses multi-link operation (MLO) to improve data transmission (e.g., via using multiple frequency bands for transmissions). In some examples, MLO further comprises various features, including simultaneous transmit and receive (STR), multi-channel multi-radio (MCMR), enhanced multi-AP roaming (E-MAR), non-simultaneous transmit and receive (NSTR), multi-link multi-radio (MLMR), and/or other features.

An AP that supports MLO may be referred to as an AP multi-link device (MLD). An MLO-capable client, for example, such as a STA, may be referred to as a non-AP MLD. Such a client device may have two or more STAs with which it may establish links to an AP MLD. A connection between a STA and AP may represent a link between an AP MLD and a non-AP MLD. In some examples, APs which do not support MLO may be multi-band APs which have two or more APs operating in different bands and/or channels. An AP may operate in one or more bands and/or channels and a client device may connect to the AP via one or more of the bands and/or channels. For example, a client device may associate with the AP in one of the channels. An AP MLD may operate as a multi-band AP, while providing means for a multi-link (ML) capable client (non-AP MLD) to simultaneously use two or more of its radios and/or APs for communication with a single association. An AP MLD may be an MLMR, which is configured to communicate simultaneously with its APs with associated non-AP MLDs. Non-AP MLDs may have constraints (e.g., NSTR), which may indicate that simultaneous communication over established links is not possible. Therefore, in some such instances, a non-AP MLD may associate to an AP MLD. Accordingly, the non-AP MLD may be associated over two or more bands and/or channels and may communicate with the APs affiliated to the AP MLD over the established links.

WLAN devices configured with STR may be configured to allow simultaneous transmission and/or reception via different respective frequency bands, which may reduce latency. WLAN devices configured with MCMR may be configured to allow data transmission via two or more radios and/or channels, which may increase efficiency, reduce congestion, and/or increase network speeds. WLAN devices configured with enhanced multilink single-radio (EMLSR) may be configured to allow client devices to switch between multiple respective APs while maintaining their connections, which may allow more consistent connectivity. WLAN devices configured with NSTR may be configured to allow client devices to non-simultaneous transmission and/or reception via different respective frequency bands, which may reduce latency (particularly in comparison with single-link operation). WLAN devices configured with MLMR may be configured to allow different respective radios and/or channels to be used for managing respective links, which may reduce interference and/or improve network performance.

A WLAN system may be configured with various types of service sets, for example, such as basic service set (BSS) and/or an extended service set (ESS). A BSS may be comprised of an AP and one or more client devices (e.g., STAs) associated with the AP. The one or more client devices may have one or more common physical layer (PHY) medium access characteristics (e.g., radio frequency, modulation scheme, security settings, and/or the like). A BSSID may define the BSS such that the one or more client devices of the BSS share the same BSSID.

In some examples, two or more BSSs may have overlapping coverage areas, and they may operate with either partially or entirely same radio frequency channels. In such examples of overlapping BSSs (OBSSs), a client device may transmit frames from the area of overlap, and one or more other client devices may sense the transmission. Responsive to sensing the transmission, the one or more other client devices may cease their own transmissions. In some examples, if the other client devices do not sense the transmission, the other client devices may become hidden terminals with respect to the client device which is transmitting.

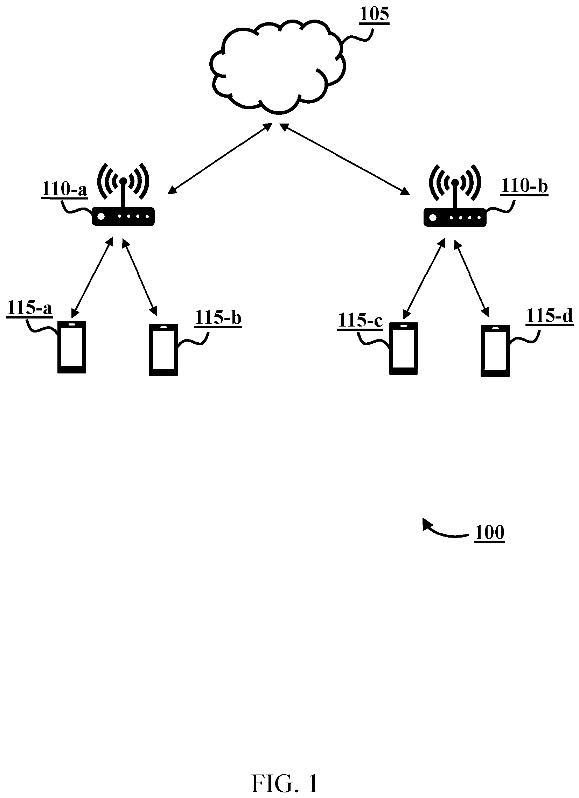

Figure 1 illustrates an example communications system 100 to which one or more examples disclosed herein may be applied. The communications system 100 may include a cloud network 105, one or more APs (e.g., an AP 110-a, an AP 110-b), and one or more client devices, also referred to herein as STAs, connected to the one or more APs. For example, the communications system 100 may include a STA 115-a and a STA 115-b connected to the AP 110-a, as well as a STA 115-c and a STA 115-d connected to the AP 110-b. In some examples, the APs 110 may be mobile access points (mAPs) with constrained functionality. In some such examples, a configuration comprising an mAP and a STA may be implemented as part of a peer-to-peer connection, for example, as in Wi-Fi Direct or Wi-Fi Aware. In some examples, a device may simultaneously operate as a STA and as an AP. One such an example case is in a multi-AP or mesh network, which includes two or more devices that may act as APs and use Wi-Fi for the wireless backhaul connectivity based on a STA-AP connection model.

In some wireless communications systems, APs may provide wireless connectivity for one or more STAs according to the Wi-Fi standards, such as those that are a subset of the IEEE 802 family of standards. For example, the MAC and PHY specifications for Wi-Fi access points are defined by IEEE 802.11 for transmitting and receiving data in frequency bands such as 2.4 GHz, 3.6 GHz, 5 GHz, 6 GHz, 60 GHz, and/or the like. APs and STAs may communicate through the transmission of frames, including data frames, management frames, and/or control frames, which may be transmitted in unicast messages, broadcast messages, or multicast messages. The 802.11 standards define an inter-frame space (IFS) as the nominal time (in microseconds (µs)) that the MAC and PHY use to receive the last symbol of a frame, process the frame, and respond with the first symbol of a response frame (e.g., the earliest possible response frame).

In the example of Figure 1, the STAs 115 may be configured to be in a wireless connection with at least one Wi-Fi AP (e.g., the APs 110). Functionalities of the at least one Wi-Fi AP may be implemented by various entities and/or types of entities, for example, such as APs, mAPs, access nodes, nodes, hosts, servers, base stations, and/or other entities suitable for such usage. Functionalities of the at least one client device may be implemented by various entities and/or types of entities, for example, such as clients-side user devices, STAs, UEs, and/or other entities suitable for such usage. For example, the communications system 100 may support radio frequency sensing during IFS.

The communications system 100 may support latency-sensitive applications at Wi-Fi devices (e.g., APs, STAs). Some such applications may include for example virtual reality (VR) applications, mixed reality applications, extended reality (XR) and augmented reality (AR) applications. In some cases, reliability and non-deterministic channel access, such as for wideband transmissions, may constrain a performance of latency-sensitive applications. For example, for a wideband transmission (or channel bonding), a device may use a primary 20 MHz channel to communicate control frames and management frames and may communicate data frames by bonding a BSS primary channel (also referred to herein as a reference primary channel or, more simply, a primary channel) with one or more other available 20 MHz channels, which are referred to as secondary channels. Channel bonding was introduced to provide for transmissions over multiple contiguous 20 MHz channels. In some instances, channel bonding may support transmissions over a total bandwidth of 40 MHz, 80 MHz, 160 MHz, or 320 MHz.

In some examples, if the device assesses the BSS primary channel to be idle, the device may perform a wideband transmission across a bandwidth including the BSS primary channel or the BSS primary channel and one or multiple contiguous secondary channels (e.g., totaling 40 MHz, 80MHz, or 160 MHz or 320MHz). In some instances, however, an overlapping basic service set (OBSS) transmission may overlap (partially or fully) with the BSS primary channel. In some such instances, the device may determine that the BSS primary channel is busy and, as such, may defer the wideband transmission. Consequently, the secondary channels may sit idle until the BSS primary channel is available, which may lead to reduced performance, for example, for latency-sensitive applications.

A procedure (e.g., a procedure defined in IEEE 802.11ac) may enable a device, such as a STA, to adjust a transmission bandwidth of the STA per TXOP to include 20 MHz, 40 MHz, 80 MHz, or 160 MHz based on channel availability. In some examples, however, the adjustment to the transmission bandwidth may be contingent upon the resulting bandwidth being contiguous, and the primary channel was assessed to be idle. For example, the STA may adjust the transmission bandwidth of the STA per TXOP to include 20 MHz, 40 MHz, 80 MHz, or 160 MHz based on channel availability so long as the resulting bandwidth is contiguous, and the primary channel was assessed to be idle. In some cases, however, such constraint may result in a substantial amount of unused spectrum, as some non-contiguous 20 MHz channels may be available, but sit idle due to the STA being constrained to using contiguous channels.

Some example embodiments described herein may relate to 802.11bn, a new amendment to the 802.11 specification currently under development in the 802.11 working group, in task group TGbn.

The 802.11bn amendment is in the process of defining new features including the concept of Non-Primary Channel Access (NPCA). The basic concept of NPCA feature is to temporarily utilize an idle alternative channel as a BSS primary channel, referred to herein as an NPCA primary channel, when the BSS's primary channel is occupied, for example, by OBSS or other conditions.

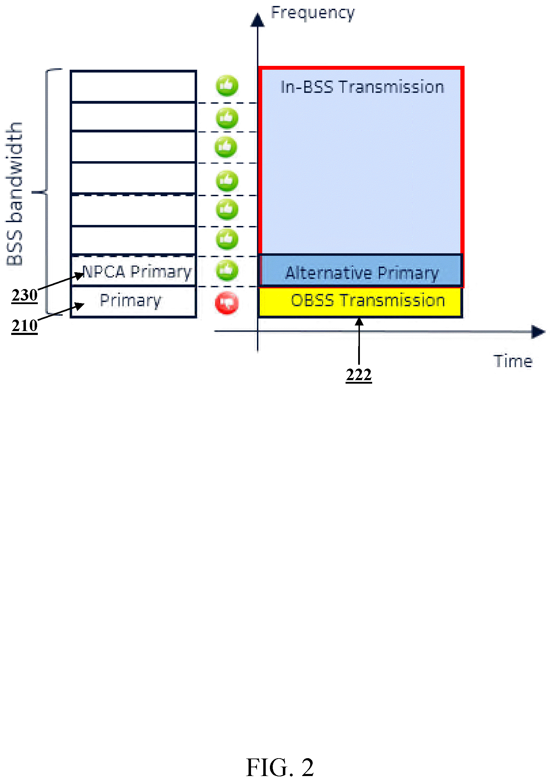

Figure 2 illustrates a high-level representation of NPCA. As shown, the primary channel 210 for the BSS is occupied by the OBSS transmission 220. Accordingly, the NPCA primary channel 230 may be temporarily used for transmission as an alternative primary channel.

IEEE 802.11bn has agreed that the switch from the BSS primary channel to the NPCA primary channel shall occur based on the detection of either an OBSS control frame exchange or an OBSS High Efficiency (HE)/ Extremely High Throughput (EHT)/ Ultra High Reliability (UHR) Physical Protocol Data Unit (PPDU).

The latest draft of the 802.11bn has stated the following: "1) the STA received a PPDU and/or received a PHY-RXSTART.indication primitive for an HE/EHT/UHR PPDU on the BSS primary channel and all of the following conditions are true: a. the PPDU is classified by the STA as an inter-BSS PPDU following the procedure defined in 26.2.2 (Intra-BSS and inter-BSS PPDU classification). b. the duration of the PPDU, (determined by the MAC in a manner TBD, but necessarily involving some of the parameters of the RXVECTOR associated with the received PPDU) or the duration of the PPDU plus the value of the RXVECTOR parameter TXOP_DURATION of the PPDU, is greater than the value indicated in the most recently received or transmitted NPCA Minimum Duration Threshold field corresponding to the BSS of which it is a member i) whether the RXVECTOR parameter TXOP_DURATION of the PPDU is considered for this comparison and whether it is indicated by the AP is TBD. c. the 20/40/80/160 MHz channel occupied by the PPDU is identified by the STA, based on the Bandwidth field in the PHY preamble of the PPDU and the channel allocations in the corresponding band, and the channel occupied by the PPDU does not overlap with the NPCA primary channel. d. TBD conditions. 2) the STA received a PPDU containing a Control frame and a PPDU containing an initial response frame of a Control frame exchange on the BSS primary channel and all of the following conditions apply: a. the received PPDU(s) are classified by the STA as inter-BSS PPDU(s) following the procedure defined in 26.2.2 (Intra-BSS and inter-BSS PPDU classification). b. the TXOP duration, determined from the Duration field of the received frame(s), is greater than the value indicated in the most recently received or transmitted NPCA Minimum Duration Threshold field corresponding to its BSS i) Whether the RXVECTOR parameter TXOP_DURATION of the received PPDU(s) are considered for this comparison is TBD. c. the 20/40/80/160 MHz channel occupied by the received PPDU(s), identified by the STA based on the channel allocations in the corresponding band and the PPDU bandwidth that is signaled in the received PPDU(s) or obtained from the RXVECTOR parameter CH_BANDWIDTH_IN_NON_HT of the received PPDU(s), does not overlap with the NPCA primary channel i) if the Control frame is an RTS frame in a non-HT (duplicate) PPDU, then it includes a bandwidth signaling TA and the signaled PPDU bandwidth is 20 MHz, 40 MHz, 80 MHz, or 160 MHz, ii) identification of the channel occupied by a received CTS frame in a non-HT (duplicate) PPDU is determined by examining the RTS frame or the MU-RTS frame that elicited the CTS response. d. TBD conditions."

Importantly, conditions regarding when a STA should be configured to switch from the NPCA primary channel back to the BSS primary channel have not been defined. Currently, existing solutions lack techniques for configuring a STA to switch from the NPCA primary channel back to the BSS primary channel in a manner that would be consistent between an AP and its associated non-AP STAs. Additionally, existing solutions lack techniques for determining how long a STA may be configured to content a channel to acquire a TXOP before the STA switches from the NPCA primary channel back to the BSS primary channel.

Accordingly, various example embodiments described herein provide technical solutions to these and other issues. For example, some embodiments described herein provide techniques for an NPCA capable STA (e.g., an AP or non-AP STA) that belongs to an NPCA enabled BSS to determine when to switch from the NPCA primary channel back to the BSS primary channel for both triggered and untriggered transmissions. Some example embodiments described herein provide techniques for an NPCA capable STA that belongs to an NPCA enabled BSS to determine how long the STA may contend to acquire a TXOP on the NPCA primary channel before switching back to BSS primary channel.

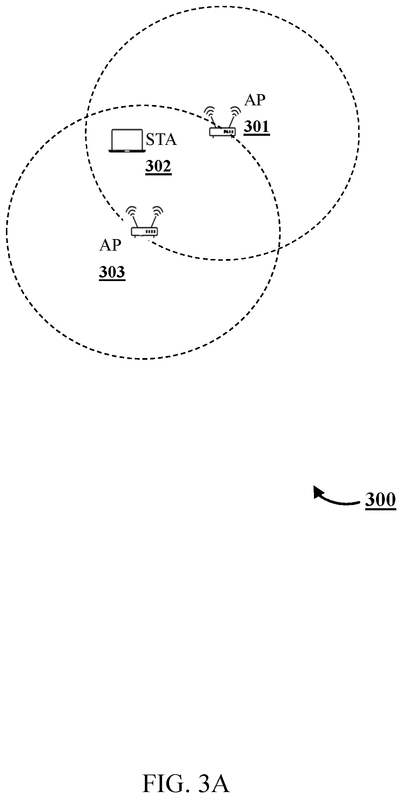

Figure 3A illustrates an example environment 300 in accordance with some example embodiments described herein. As shown, the example environment 300 includes the AP 301, STA 302, and AP 303. The STA 302 is associated with the AP 301 for communication and is positioned within range of AP 301 and AP 303.

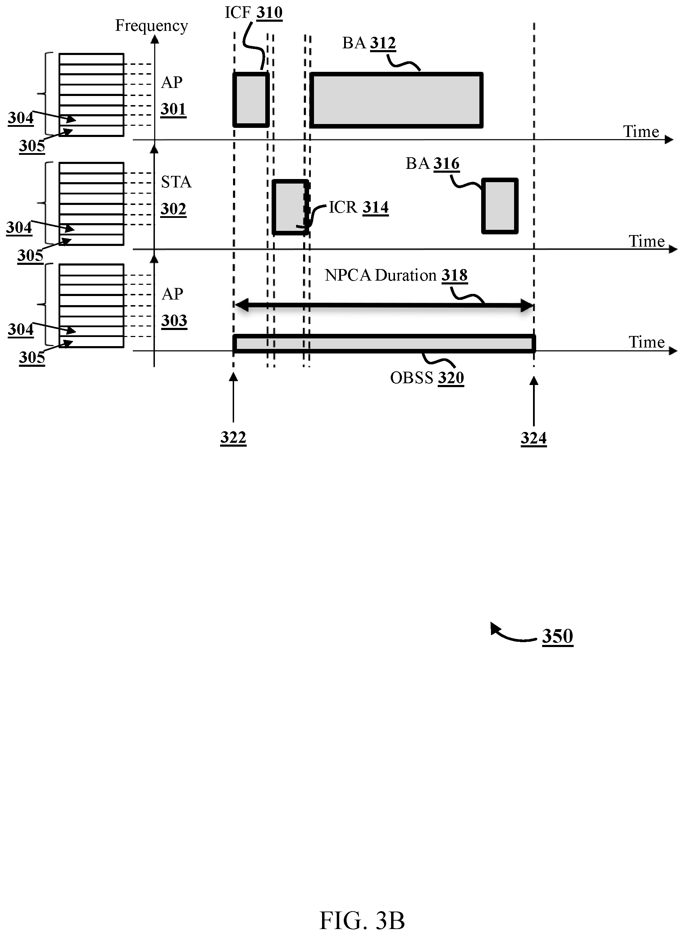

Figure 3B illustrates an example time-frequency domain 350 in accordance with some example embodiments described herein. As shown, the AP 301 is associated with the BSS primary channel 305 and the NPCA primary channel 304. The OBSS 320 is an OBSS transmission associated with the AP 303 which overlaps with the BSS primary channel 305. At 322, due to the OBSS 320, the AP 301 and STA 302 switch from the BSS primary channel 305 to the NPCA primary channel 304. The AP 301 transmits the initial control frame 310 to the STA 302. The STA 302 transmits the initial control response (ICR) frame 314 to the AP 301 in response to the ICF 310. Additionally, the AP 301 transmits the Block Ack (BA) 312 and the STA 302 transmits the BS 316. The NPCA duration 318 is a duration associated with the NPCA operations of the AP 301 and the STA 302. At 324, due to the expiration of the NPCA duration 318, the AP 301 and the STA 302 switch from the NPCA primary channel 304 back to the BSS primary channel 305.

As described in greater detail below, in some embodiments, various additional and/or different operations and transmissions may be associated with respect to an AP and one or more associated non-AP STAs during NPCA for determining when to switch from the NPCA primary channel to the BSS primary channel, determining how long to contend to acquire a TXOP on the NPCA primary channel, or determining how long to wait for any transmissions without acquiring a TXOP if operating as a responding device before switching to the BSS primary channel.

Some embodiments may provide techniques for a STA to switch from the NPCA primary channel back to the BSS primary channel before successful channel contention when a STA operates as an initiating device configured to acquire a TXOP. For example, once a STA has switched to the NPCA primary channel because of an OBSS overlapping with the BSS primary channel, the STA may contend the NPCA primary channel to acquire a TXOP. In some embodiments, the STA may monitor one or more conditions for switching back to the BSS primary channel and/or determine one or more conditions for switching back to the BSS primary channel are satisfied. In response to one or more conditions for switching back to the BSS primary channel being satisfied, the STA may switch from the NPCA primary channel to the BSS primary channel before successful channel contention for the TXOP.

In some embodiments, a condition for switching back to the BSS primary channel may include some duration after switching to the NPCA primary channel expiring. For example, a predefined or configurable duration may define an amount of time the STA may remain on the NPCA primary channel without successfully contending for a TXOP. Accordingly, if the STA fails to acquire the channel for a TXOP before the predetermined duration expires, the STA may be configured to switch from the NPCA primary channel to the BSS primary channel in response to the predetermined duration expiring.

In various embodiments, a condition for switching back to the BSS primary channel may include a number of attempts to acquire a TXOP by the STA satisfying a predetermined and/or configurable threshold. For example, the STA may switch from the BSS primary channel to the NPCA primary channel and unsuccessfully contend the NPCA primary channel for a TXOP. In this example, once the number of times the STA unsuccessfully contends the NPCA primary channel for a TXOP satisfies a threshold (e.g., after a certain number of retries, after a certain number of contention intervals, etc.), the STA may switch back to the BSS primary channel in response.

In some embodiments, a condition for switching back to the BSS primary channel may include the expiration of an NPCA dwelling timeout. In some embodiments, the NPCA dwelling timeout may define a maximum duration that STA may unsuccessfully contend for a TXOP on the NPCA primary channel until the switch back to the BSS primary channel must occur. For example, the STA may switch from the BSS primary channel to the NPCA primary channel and, in an instance in which the STA is configured to acquire a TXOP but has not acquired a TXOP (e.g., unsuccessful channel contention), switch back to the BSS primary channel before or by the expiration of an NPCA dwelling timeout.

In some embodiments, a STA may consider a plurality of conditions for switching back to the BSS primary channel. For example, the STA may switch from the BSS primary channel to the NPCA primary channel and switch back to the BSS primary channel based on a number of attempts to acquire a TXOP satisfying a threshold and/or at least by the expiration of an NPCA dwelling timeout, as described herein.

In some embodiments, an NPCA dwelling timeout may depend on one or more capabilities of a STA (e.g., switching delays necessary for the STA to switch between the BSS primary channel and the NPCA primary channel). In an example, an NPCA dwelling timeout may be defined by the following: 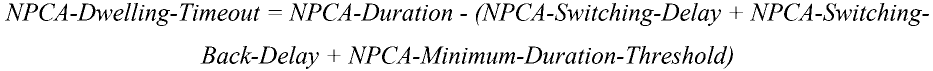 NPCA-Dwelling-Timeout = NPCA-Duration - (NPCA-Switching-Delay + NPCA-Switching-Back-Delay + NPCA-Minimum-Duration-Threshold) where: NPCA-Duration denotes a duration associated with the amount of time a STA stays on the NPCA primary channel before switching back to the BSS primary channel; NPCA-Switching-Delay denotes the time needed by the STA to switch from the BSS primary channel to the NPCA primary channel; NPCA-Switching-Back-Delay denotes the time needed by the STA to switch from the NPCA primary channel to the BSS primary channel; and NPCA-Minimum-Duration-Threshold denotes the minimum duration of OBSS activity (e.g., a duration of an PPDU or TXOP of an OBSS transmission) to permit a STA to switch to the NPCA primary channel.

In some embodiments, within the NPCA Operation Information field, the NPCA-Switching-Delay may be indicated within the NPCA Switching Delay field, the NPCA-Switching-Back-Delay may be indicated within the NPCA Switching Back Delay field, and the NPCA-Minimum-Duration-Threshold may be indicated within the NPCA Minimum Duration Threshold field.

In some embodiments, the NPCA-Duration (also referred to herein as "NPCA duration") may be or correspond to an OBSS Busy duration, for example, an OBSS Basic Network Allocation Vector (NAV) duration of an OBSS transmission on the BSS primary channel that triggered the switch to the NPCA primary channel. In some embodiments, the NPCA duration may be or correspond to a TXOP duration, for example, a TXOP duration that a STA is configured to reserve on the NPCA primary channel.

In some embodiments, in an instance in which the NPCA duration is or corresponds to a TXOP duration, the NPCA duration may be configured such that the NPCA duration is at most as long as an OBSS Basic NAV duration, a duration of a PPDU, or some other OBSS Busy duration of an OBSS transmission that triggered the switch from the BSS primary channel to the NPCA primary channel. In some embodiments, in an instance in which the NPCA duration is or corresponds to a TXOP duration, the NPCA duration may be configured such that the NPCA duration is at least long enough to allow a Block Ack (BA) transmission for one or more PPDUs that are configured for transmission. In some embodiments, in an instance in which the NPCA duration is or corresponds to a TXOP duration, the NPCA duration may be configured such that the NPCA duration is long enough to allow a TXOP return transmission from an AP's perspective when the AP is operating Code-Time Division Multiple Access (C-TDMA) jointly with NPCA.

In some embodiments, the NPCA duration may be or correspond to a duration of a PPDU of an OBSS that triggered the switch from the BSS primary channel to the NPCA primary channel. In some embodiments, the NPCA duration may be or correspond to a service period in which a STA is configured to acquire a TXOP for one or more transmissions (e.g., transmit for un-restricted and restricted target wake time (TWT)). In some embodiments, the NPCA duration may depend on an NPCA mode of operation, for example, TXOP based NPCA, PPDU based NPCA, or SP based NPCA.

In some embodiments, a STA may be configured based on an NPCA mode of operation. For example, a condition for switching back to the BSS primary channel may depend on an NPCA mode of operation. In an example, in an instance in which only triggered transmissions are allowed (and untriggered transmissions are not allowed), a STA may switch from the NPCA primary channel to the BSS primary channel based on a number of attempts to acquire a TXOP satisfying a predetermined threshold and based on an NPCCA dwelling timeout. In another example, in an instance in which untriggered transmissions are allowed, a STA may switch from the NPCA primary channel to the BSS primary channel after a predetermined and/or configurable duration has expired and the STA has determined the NPCA primary channel is busy (e.g., after unsuccessful channel contention). In another example, in an instance in which NPCA may be PPDU-based or TxOP-based, a STA may switch from the NPCA primary channel to the BSS primary channel based on a different set of conditions for switching back to the BSS primary channel that must be satisfied.

In some embodiments, in an instance in which the STA is not configured to contend for a TXOP, the STA may switch from the NPCA primary channel to the BSS primary channel based on one or more conditions for switching back to the BSS primary channel being satisfied. In some such embodiments, some examples of a condition for switching back to the BSS primary channel may include: determining an NPCA dwelling timeout has expired and an initial control frame (ICF) has not been received from a TXOP holder or an associated STA; determining that an ICF has not been received within a predefined and/or configurable duration since switching to the NPCA primary channel; determining a duration of a PPDU of an OBSS transmission that caused the switch to the NPCA primary channel has expired; or determining an OBSS Basic NAV duration of an OBSS transmission that caused the switch to the NPCA primary channel has expired.

Some embodiments may provide techniques for a STA to switch from the NPCA primary channel back to the BSS primary channel after contention. For example, some embodiments described herein may be applied to an instance in which only triggered UL transmission are allowed for NPCA (and untriggered UL transmission are not allowed). In some such embodiments, after switching from the BSS primary channel to the NPCA primary channel, an AP may transmit an ICF including a field to signal information associated with an NPCA duration. Additionally, some embodiments may provide techniques for a STA that is not configured to acquire a TXOP on the NPCA primary channel to switch from the NPCA primary channel back to the BSS primary channel based on one or more conditions for switching back to the BSS primary channel being satisfied, as described herein.

In some embodiments, information associated with the NPCA duration indicated within the ICF may be in the form of a list or array where the OBSS Basic NAV duration (or some other OBSS Busy duration) of each OBSS overlapping with the BSS primary channel is provided. In some embodiments, information associated with the NPCA duration indicated within the ICF may include a single value which corresponds to a maximum OBSS Basic NAV duration (or some other OBSS Busy duration) among a plurality of OBSSs that overlap the BSS primary channel. In some embodiments, information associated with the NPCA duration indicated within the ICF may be provided together with the BSS color relative to the specific OBSS Basic NAV duration (or some other OBSS Busy duration).

In various embodiments, in an instance in which only triggered UL transmissions are allowed for NPCA, the NPCA duration may be or correspond to an OBSS Basic NAV duration, a duration of a PPDU, or some other OBSS Busy duration of an OBSS transmission that triggered the switch from the BSS primary channel to the NPCA primary channel. In some embodiments, in an instance in which only triggered UL transmissions are allowed for NPCA, the NPCA duration may be or correspond to a service period in which a STA is configured to acquire a TXOP and transmit for un-restricted and restricted TWT.

In some embodiments, in an instance in which only triggered UL transmissions are allowed for NPCA, the NPCA duration may be or correspond to a TXOP duration that an AP is configured to reserve on the NPCA primary channel. In some embodiments, in an instance in which only triggered UL transmissions are allowed for NPCA and the NPCA duration is or corresponds to a TXOP duration, the NPCA duration may be configured such that one or more of the following conditions are satisfied: the NPCA duration is at most as long as an OBSS Basic NAV duration or a duration of a PPDU of an OBSS transmission that caused the switching from the BSS primary channel to the NPCA primary channel; the NPCA duration is at least long enough to allow a Block Ack (BA) transmission for one or more PPDUs configured for transmission; or the NPCA duration is at least long enough to allow a TXOP return transmission from an AP's perspective when the AP is operating Code-Time Division Multiple Access (C-TDMA) jointly with NPCA.

In some embodiments, in an instance in which only triggered UL transmissions are allowed for NPCA, a STA may switch back to the BSS primary channel from the NPCA primary channel based on the NPCA duration indicated within the ICF transmitted by an AP. For example, in some such embodiments, the STA may switch back to the BSS primary channel from the NPCA primary channel when or sometime after when the NPCA duration expires. In another example of some such embodiments, a STA may switch back to the BSS primary channel from the NPCA primary channel when or sometime after when a maximum NPCA duration among a plurality of NPCA durations expires.

In some embodiments, one or more NPCA durations may be used. For example, in an instance in which only triggered UL transmissions are allowed for NPCA, for each of a plurality of OBSS transmissions that overlap a BSS primary channel, there may be a corresponding NPCA duration determined, thereby resulting in a plurality of NPCA durations. In this manner, in some embodiments, a greatest NPCA duration may be used among a plurality of NPCA durations. In some embodiments, there may be only a single NPCA duration determined, sometimes referred to herein as an individual NPCA duration. In some embodiments, an AP may be configured to determine a plurality of NPCA durations and a non-AP STA may be configured to determine an individual NPCA duration.

In some embodiments, a STA may switch back to the BSS primary channel from the NPCA primary channel based on the NPCA duration and one or more other durations. For example, in an instance in which only triggered UL transmissions are allowed for NPCA, a STA may use the NPCA duration indicated within an ICF received from an AP and a duration corresponding to an NPCA-Switching-Back-Delay duration. In another example, in an instance in which only triggered UL transmissions are allowed for NPCA, a STA may switch from the NPCA primary channel back to the BSS primary channel when or sometime after when a duration corresponding to the NPCA duration minus an NPCA-Switching-Back-Delay duration expires. In various embodiments, a STA may switch from the NPCA primary channel to the BSS primary channel based on a duration corresponding to the following: $NPCA - Duration * - NPCA - Switching - Back - Delay$ where NPCA-Duration* denotes either an individual NPCA duration or a maximum NPCA duration among a plurality of NPCA durations provided by an AP.

In some embodiments, in an instance in which only triggered UL transmissions are allowed for NPCA, after receiving an ICF, a non-AP STA may transmit an initial control response (ICR) frame including information associated with an NPCA duration. In some such embodiments, there may be modifications and/or exceptions to the NPCA duration the non-AP STA may transmit within an ICR frame. For example, in some such embodiments, the NPCA duration may be configured such that it cannot be equal to a TXOP duration, but instead the non-AP STA may indicate the TXOP duration that may be required for the non-AP STAs transmission which may be used to define an NPCA duration. In some embodiments, an NPCA duration may only be included within an ICF and not within an ICR frame.

In some embodiments, a STA may be configured to always switch back to the BSS primary channel from the NPCA primary channel based on an NPCA duration indicated by an AP. In some embodiments, a non-AP STA that received an NPCA duration from the AP may update the non-AP STA's NPCA duration to the AP's NPCA duration. In some embodiments, a non-AP STA may be configured to switch back to the BSS primary channel from the NPCA primary channel based on an NPCA duration that is a maximum NPCA duration among one or more NPCA durations indicated by an AP and an NPCA duration determined by the non-AP STA.

In some embodiments, a non-AP STA may be configured to switch back to the BSS primary channel from the NPCA primary channel based on an individual NPCA duration that is determined by the non-AP STA up to an NPCA duration indicated by the AP. For example, in an instance in which only triggered UL transmissions are allowed for NPCA, if the individual NPCA duration determined by the non-AP STA is greater than the NPCA duration indicated by the AP, the individual NPCA duration determined by the non-AP STA may be limited (e.g., upper bounded) by the NPCA duration indicated by the AP.

In some embodiments, a non-AP STA may be configured to switch back to the BSS primary channel from the NPCA primary channel based on an individual NPCA duration that is determined by the non-AP STA. In some embodiments, an AP may be configured to switch back to the BSS primary channel from the NPCA primary channel based on a maximum individual NPCA duration from among one or more individual NPCA durations corresponding to one or more non-AP STAs.

In some embodiments, an AP may be configured to determine that a non-AP STA is not available to transmit or receive on the NPCA primary channel for the entirety of an NPCA duration that is at least as long as the NPCA duration indicated by the AP within the ICF. For example, in an instance in which only triggered UL transmissions are allowed for NPCA and an AP does not receive an initial control response (ICR) frame from a non-AP STA, the AP may assume that the non-AP STA is not available to transmit or receive on the NPCA primary channel for the NPCA duration indicated by the AP in the ICF.

Some embodiments may provide techniques for a STA to switch back to the BSS primary channel from the NPCA primary channel in an instance in which untriggered UL transmissions are allowed for NPCA. In some embodiments, in an instance in which untriggered UL transmissions are allowed and after switching from the BSS primary channel to the NPCA primary channel, a STA may transmit an ICF including a field to signal information associated with an NPCA duration. In some examples, in an instance in which untriggered UL transmissions are allowed for NPCA, the NPCA duration may be or correspond to an OBSS Busy duration such as an OBSS Basic NAV duration, a TXOP duration that a non-AP STA is configured to use on the NPCA primary channel, an OBSS PPDU duration of an OBSS transmission that triggered switching to the NPCA primary channel, a service period in which a non-AP STA is configured to acquire a TXOP and transmit for unrestricted or restricted TWT operation, and/or the like as described herein.

In some embodiments, a STA may switch back to the BSS primary channel from the NPCA primary channel based on the NPCA duration indicated within the ICF transmitted by a non-AP STA. In some examples, in an instance in which untriggered UL transmission are allowed for NPCA, a STA may switch back to the BSS primary channel from the NPCA primary channel when or at least when an individual NPCA duration expires, when or at least when a maximum among one or more NPCA durations expires, when or at least when a duration based on an NPCA duration (which may be an individual NPCA duration or a greatest among a plurality of NPCA durations) and an NPCA-Switching-Back-Delay duration expires.

In some embodiments, if the NPCA duration determined by a non-AP STA and indicated within an ICF is larger or greater than an NPCA duration determined by an AP (e.g., as determined by the AP's assessment of OBSS transmissions overlapping with the BSS primary channel), the AP may not transmit a response (e.g., an ICR frame) to the ICF. In some such embodiments, an instance in which a non-AP STA transmits an ICF and does not receive an ICR frame from the associated AP may trigger the non-AP STA to switch back to the BSS primary channel from the NPCA primary channel.

In some embodiments, an AP may transmit an ICR frame that includes a field indicating information associated with an NPCA duration. For example, in an instance in which untriggered UL transmissions are allowed for NPCA, the AP may generate the NPCA duration based on the detection of one or more OBSS transmissions overlapping with the BSS primary channel. In various embodiments, the signaling of an NPCA duration within an ICR frame may be independent from the inclusion of an NPCA duration within the ICF. For example, in an instance in which untriggered UL transmissions are allowed for NPCA, the NPCA duration may be only signaled within the ICR frame (and not within the ICF). In some embodiments, the interpretation or meaning of the NPCA duration may also be different with respect to whether the NPCA duration is signaled within the ICF or ICR frame.

In some embodiments, based upon the NPCA duration carried within the ICR frame transmitted by an AP, an associated STA may switch back to the BSS primary channel based on one or more of the following conditions: when or at least when the individual NPCA duration expires; when or at least when the maximum among one or more NPCA durations expires; when or at least when a duration based on the NPCA duration and the NPCA-Switching-Back-Delay expires, where the NPCA duration is either an individual NPCA duration or a maximum NPCA duration among a plurality of NPCA durations.

In some embodiments, if an NPCA duration is signaled in both the ICF and ICR frame, a STA may be configured to always switch from the NPCA primary channel to the BSS primary channel based on the NPCA duration signaled by the AP. In some embodiments, if an NPCA duration is signaled in both the ICF and ICR frame, a non-AP STA may be configured to switch from the NPCA primary channel to the BSS primary channel based on a maximum NPCA duration between the NPCA duration(s) signaled by the AP and the individual NPCA duration determined by the non-AP STA. In some embodiments, if an NPCA duration is signaled in both the ICF and ICR frame, a non-AP STA may be configured to switch from the NPCA primary channel to the BSS primary channel based on an individual NPCA duration determined by the non-AP STA up to an NPCA duration indicated by the AP, for example, in an instance in which the individual NPCA duration determined by the non-AP STA is greater than the NPCA duration determined by the AP. In some embodiments, if an NPCA duration is signaled in both the ICF and ICR frame, a non-AP STA may be configured to switch from the NPCA primary channel to the BSS primary channel based on an individual NPCA duration determined by the non-AP STA. In some embodiments, if an NPCA duration is signaled in both the ICF and ICR frame, an AP may be configured to switch from the NPCA primary channel to the BSS primary channel based on a maximum NPCA duration among one or more individual NPCA durations determined by one or more non-AP STAs.

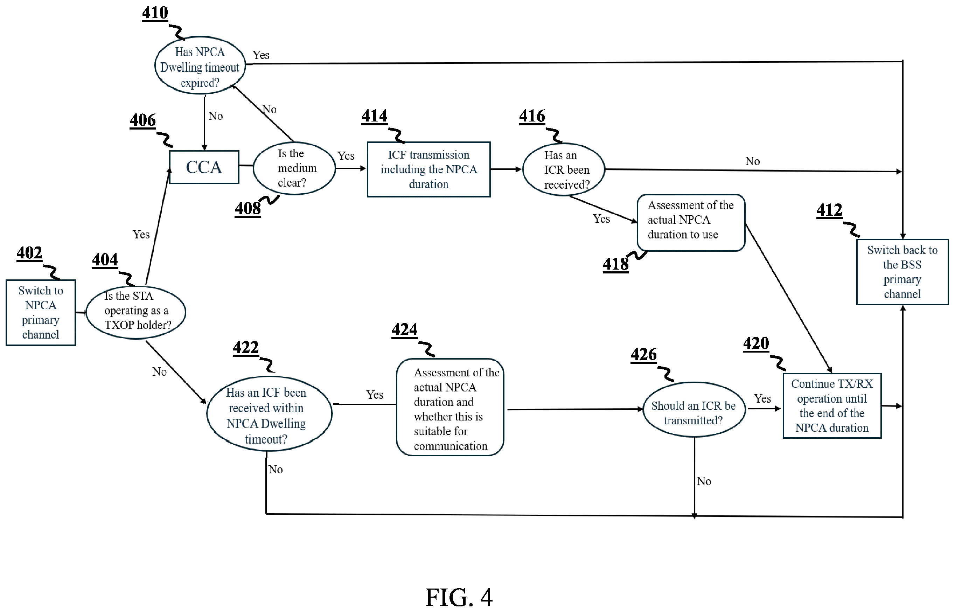

Figure 4 illustrates an example flowchart 400 in accordance with some example embodiments described herein. As shown, at 402, a STA switches to an NPCA primary channel. For example, in some embodiments, a non-AP STA may switch from a BSS primary channel to a NPCA primary channel for communication with an AP or an AP may switch from a BSS primary channel to a NPCA primary channel for communication with a non-AP STA. In various examples, the NPCA may be associated with different NPCA modes of operation, untriggered UL transmissions may be enabled, or untriggered UL transmissions may not be enabled.

At 404, if the STA is operating as a TXOP holder, for example, if the STA is configured to contend for a TXOP, the flowchart 400 proceeds to 406. At 406, the STA may perform one or more operations for Clear Channel Assessment (CCA), for example, to determine whether the channel is free before transmitting data. Additionally or alternatively, the STA may perform channel contention for a TXOP. At 408, if the channel is not clear, the flowchart proceeds to 410. The STA may monitor and/or determine one or more conditions for switching back to the BSS primary channel. For example, at 410, if the NPCA Dwelling timeout has expired, the flowchart proceeds to 412 and the STA switches back to the BSS primary channel.

Alternatively, if the NPCA dwelling timeout has not expired, the flowchart returns to 406 and the STA may again determine whether the channel is clear. If the channel is clear, the flowchart proceeds to 414 where the STA may transmit an ICF including indication of an NPCA duration. At 416, the STA may determine whether an ICR frame has been received. If the ICR frame has not been received, the flowchart proceeds to 412 and the STA switches back to the BSS primary channel.

Alternatively, if the ICR frame has been received, the flowchart proceeds to 418 where an NPCA duration will be determined for use. In some examples, if the STA is a non-AP STA and the ICR frame includes an NPCA duration determined by the AP, the STA may be configured to use the NPCA duration included within the ICR frame, a maximum NPCA duration among the NPCA duration included within the ICF and the NPCA duration included within the ICR frame, or the NPCA duration included within the ICF (and determined by the STA). In yet another example, if the STA is a non-AP STA and the ICR frame includes an NPCA duration determined by the AP, the STA may use the NPCA duration included within the ICF up to the NPCA duration included within the ICR frame.

In some additional examples, if the STA is an AP and the ICR frame includes an NPCA duration determined by a non-AP STA, the AP may use the NPCA duration included within the ICF, a maximum NPCA duration among one or more NPCA durations included within the ICF, a maximum NPCA duration among one or more NPCA durations included within the ICF and the NPCA duration included within the ICR frame, a maximum NPCA duration among one or more NPCA durations included within the ICF and one or more NPCA durations included within one or more ICR frames (from a respective one or more non-AP STAs), and/or the like as described herein.

Once an NPCA duration for use has been determined, the flowchart 400 proceeds to 420. At 420, the STA may continue transmission and/or reception until the NPCA duration expires. Once the NPCA duration expires, the flowchart proceeds to 412 where the STA switches back to the BSS primary channel.

Returning to 404, if the STA is not operating as a TXOP holder, for example, if the STA is not configured to contend for a TXOP, the flowchart 400 proceeds to 422. At 422, the STA determines whether an ICF has been received before the expiration of the NPCA Dwelling timeout. If an ICF has not been received and the NPCA Dwelling timeout has expired, the flowchart 400 proceeds to 412 where the STA switches back to the BSS primary channel.

Alternatively, if the STA has received an ICF and the NPCA Dwelling timeout has not expired, the flowchart 400 proceeds to 424. At 424 an NPCA duration will be determined for use such that the NPCA duration is suitable for communication. For example, the NPCA duration may be required to be long enough for a corresponding TXOP as described herein. Once an NPCA duration for use has been determined, the flowchart 400 proceeds to 426. At 426 the STA determines whether to transmit an ICR frame. In an example, an AP may determine to not transmit an ICR frame in an instance in which the NPCA duration included within the ICF (and determined by a non-AP STA) is greater than the NPCA duration determined by the AP. If the STA determines to not transmit an ICR frame, the flowchart 400 proceeds to 412 and the STA switches back to the BSS primary channel.

Alternatively, if the STA determines to transmit an ICR frame, the flowchart 400 proceeds to 420 where the STA continues transmission and/or reception until the NPCA duration expires. Once the NPCA duration expires, the flowchart 400 proceeds to 412 and the STA switches back to the BSS primary channel.

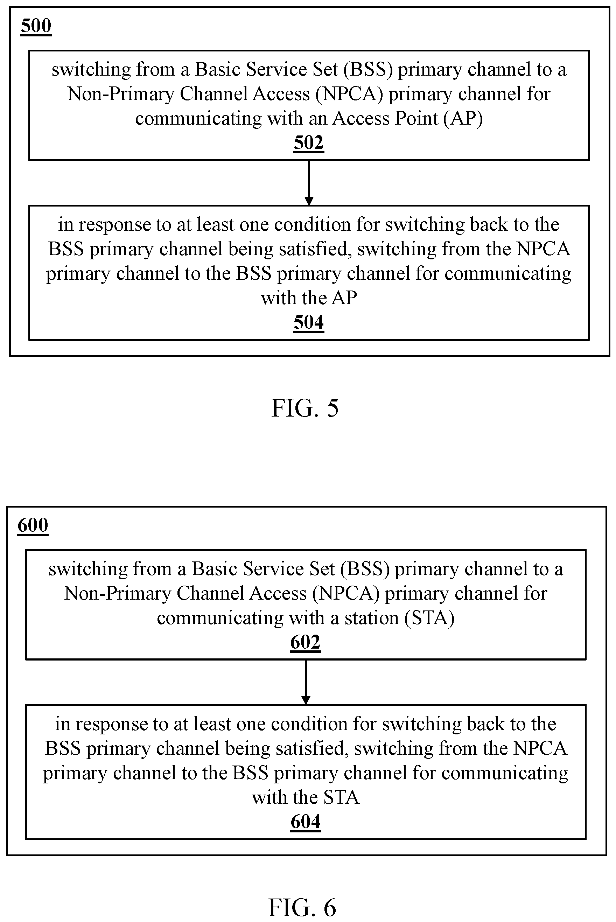

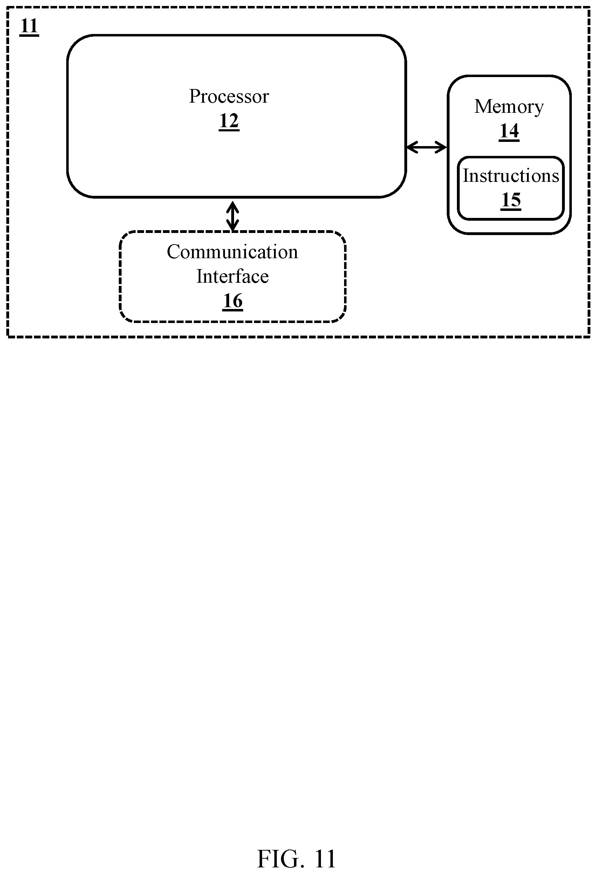

Figures 5-10 are flowcharts illustrating the operations performed for switching from the NPCA primary channel back to the BSS primary channel in accordance with some of the embodiments disclosed herein. The flowcharts of Figures 5, 7, and 9 illustrate the operations performed, such as by the apparatus 11 of Figure 11, as embodied by a non-AP STA (e.g., STAs 115) in order to support communications with one or more other devices (e.g., APs 110). The flowcharts of Figures 6, 8, and 10 illustrate the operations performed, such as by the apparatus 11 of Figure 11, as embodied by an AP (e.g., APs 110) in order to support communications with one or more other devices (e.g., STAs 115).

In the example flowchart of Figure 5, an apparatus (e.g., STAs 115), which may be embodied such as by apparatus 11 of Figure 11, includes means, such as the processor 10, the communication interface 16 or the like, switching from a Basic Service Set (BSS) primary channel to a Non-Primary Channel Access (NPCA) primary channel for communicating with an Access Point (AP), as shown in block 502. The switching may be performed by the apparatus 11 based on operations of the processor 12 and via communications interface 16. The apparatus also includes means, such as the processor 12, the communication interface 16 or the like, for, in response to at least one condition for switching back to the BSS primary channel being satisfied, switching from the NPCA primary channel to the BSS primary channel for communicating with the AP, as shown in block 504. Switching from the NPCA primary channel to the BSS primary channel may be performed by the apparatus 11 based on operations of the processor 12 via the communication interface 16, for example.

In the example flowchart of Figure 6, an apparatus (e.g., APs 110), which may be embodied such as by the apparatus 11 of Figure 11, includes means, such as the processor 12, the communication interface 16 or the like, for switching from a Basic Service Set (BSS) primary channel to a Non-Primary Channel Access (NPCA) primary channel for communicating with a station (STA), as shown in block 602. The apparatus also includes means, such as the processor 12, the communication interface 16, or the like, for, in response to at least one condition for switching back to the BSS primary channel being satisfied, switching from the NPCA primary channel to the BSS primary channel for communicating with the STA, as shown in block 604.

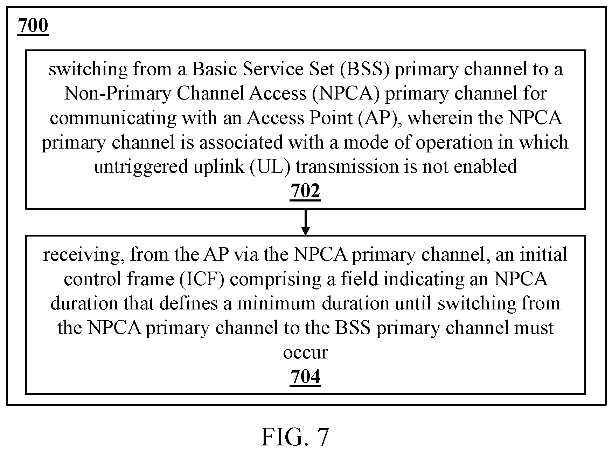

In the example flowchart of Figure 7, an apparatus (e.g., STAs 115), embodied, such as by apparatus 11 of Figure 11, includes means, such as the processor 12, the communication interface 16 or the like, for switching from a Basic Service Set (BSS) primary channel to a Non-Primary Channel Access (NPCA) primary channel for communicating with an Access Point (AP), wherein the NPCA primary channel is associated with a mode of operation in which untriggered uplink (UL) transmission is not enabled, as shown in block 702. The apparatus also includes means, such as the processor 12, the communication interface 16 or the like, for receiving, from the AP via the NPCA primary channel, an initial control frame (ICF) comprising a field indicating an NPCA duration that defines a minimum duration until switching from the NPCA primary channel to the BSS primary channel must occur, as shown in block 704.

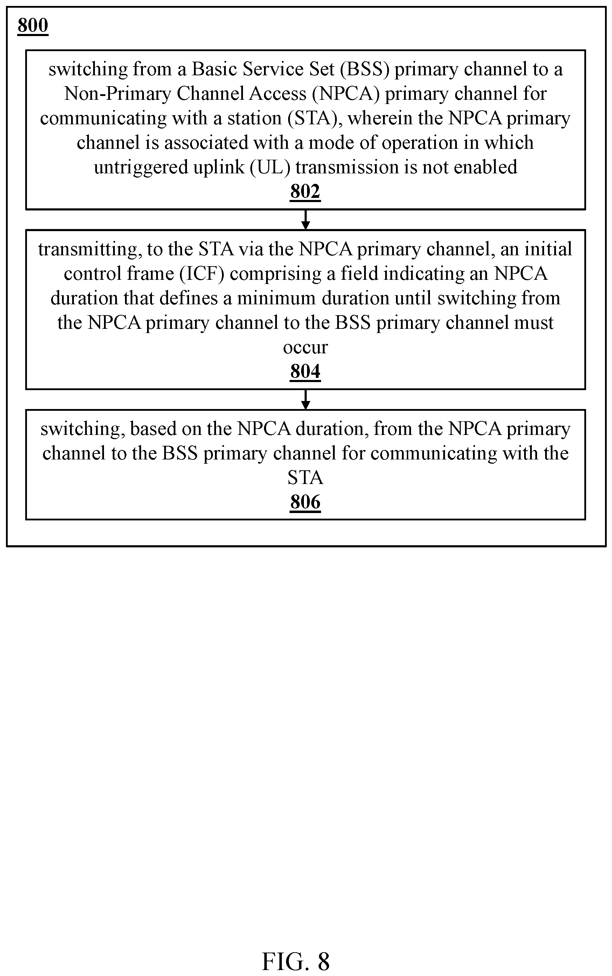

In the example flowchart of Figure 8, an apparatus (e.g., APs 110) which may be embodied by the apparatus 11 of Figure 11, includes means, such as the processor 12, the communication interface 16 or the like, for switching from a Basic Service Set (BSS) primary channel to a Non-Primary Channel Access (NPCA) primary channel for communicating with a station (STA), wherein the NPCA primary channel is associated with a mode of operation in which untriggered uplink (UL) transmission is not enabled, as shown in block 802. The apparatus also includes means, such as the processor 12, the communication interface 16 or the like, for transmitting, to the STA via the NPCA primary channel, an initial control frame (ICF) comprising a field indicating an NPCA duration that defines a minimum duration until switching from the NPCA primary channel to the BSS primary channel must occur, as shown in block 804. The apparatus also includes means, such as the processor 12, the communication interface 16 or the like, for switching, based on the NPCA duration, from the NPCA primary channel to the BSS primary channel for communicating with the STA, as shown in block 806.

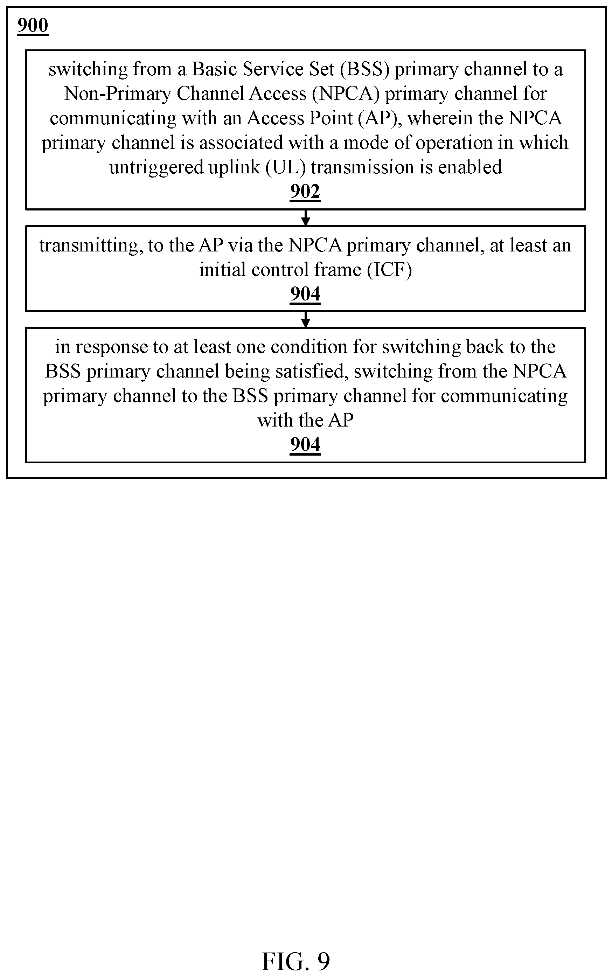

In the example flowchart of Figure 9, an apparatus (e.g., STAs 115) which may be embodied by the apparatus 11 of Figure 11, includes means, such as the processor 12, the communication interface 16 or the like, for switching from a Basic Service Set (BSS) primary channel to a Non-Primary Channel Access (NPCA) primary channel for communicating with an Access Point (AP), wherein the NPCA primary channel is associated with a mode of operation in which untriggered uplink (UL) transmission is enabled, as shown in block 902. The apparatus also includes means, such as the processor 12, the communication interface 16 or the like, for transmitting, to the AP via the NPCA primary channel, at least an initial control frame (ICF), as shown in block 904. The apparatus also includes means, such as the processor 12, the communication interface 16 or the like, for, in response to at least one condition for switching back to the BSS primary channel being satisfied, switching from the NPCA primary channel to the BSS primary channel for communicating with the AP, as shown in block 906.

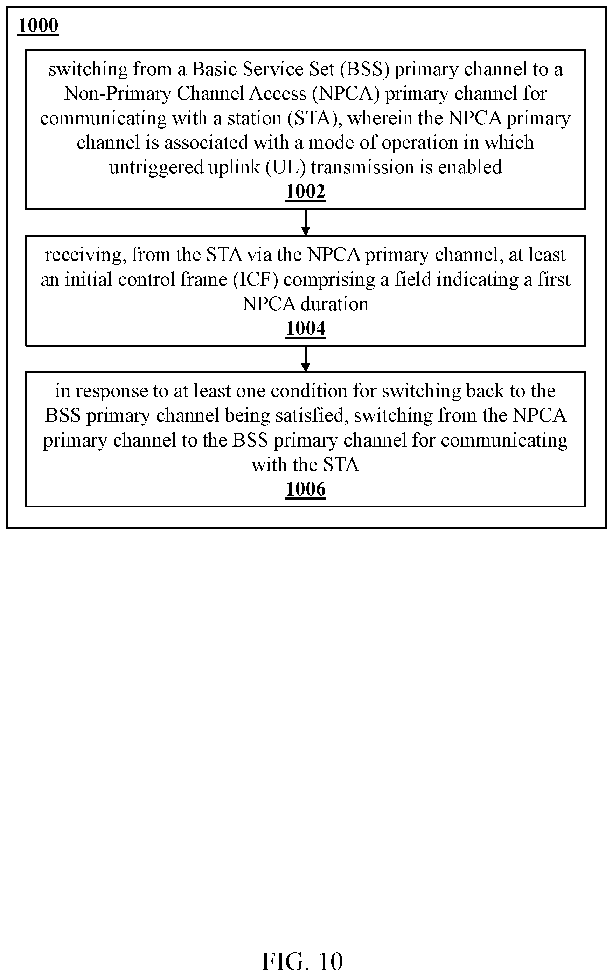

In the example flowchart of Figure 10, an apparatus (e.g., APs 110) which may be embodied by the apparatus 11 of Figure 11, includes means, such as the processor 12, the communication interface 16 or the like, for switching from a Basic Service Set (BSS) primary channel to a Non-Primary Channel Access (NPCA) primary channel for communicating with a station (STA), wherein the NPCA primary channel is associated with a mode of operation in which untriggered uplink (UL) transmission is enabled, as shown in block 1002. The apparatus also includes means, such as the processor 12, the communication interface 16 or the like, for receiving, from the STA via the NPCA primary channel, at least an initial control frame (ICF) comprising a field indicating a first NPCA duration, as shown in block 1004. The apparatus also includes means, such as the processor 12, the communication interface 16 or the like, for, in response to at least one condition for switching back to the BSS primary channel being satisfied, switching from the NPCA primary channel to the BSS primary channel for communicating with the STA, as shown in block 1006.

Figures 5-10 are flowcharts illustrating methods according to certain example embodiments. It will be understood that each block or signal and combination of blocks and signals may be implemented by various means, such as hardware, firmware, processor, circuitry, and/or other communication devices associated with execution of software including one or more computer program instructions. For example, one or more of the procedures described above may be embodied by instructions, such as for example computer program instructions. In this regard, the instructions which embody the procedures described above may be stored by the memory 14 of an apparatus 11 employing an example embodiment and executed by at least one processor 12. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In Figure 1, client devices 115 are configured to be in a wireless connection with at least one Wi-Fi AP (e.g., the APs 110). Functionalities of the at least one Wi-Fi AP may be implemented by various entities and/or types of entities, for example, such as APs, mAPs, access nodes, nodes, hosts, servers, base stations, and/or other entities suitable for such usage. Functionalities of the at least one client device may be implemented by various entities and/or types of entities, for example, such as clients-side user devices, non-AP STAs, user equipment (UEs), and/or other entities suitable for such usage.

In some examples, the communications system 100 may support radiofrequency sensing during IFS. In some examples, the communications system 100 may include a transceiver for transmitting and/or receiving signals. The transceiver may be implemented as a single integrated circuit (e.g., using a single application-specific integrated circuit (ASIC) or field-programmable gate array (FPGA)) or as a system-on-a-chip (SOC) that includes different modules for implementing the functionality of the transceiver. The network manager may include a processor and/or a memory (e.g., such as a processor 12 and/or a memory 14, further described with respect to Figure 11). The processor 12 may be used to execute the instructions 15 stored in the memory 14 and/or to store information in the memory 14, for example, such as the results of the executed instructions.

The Wi-Fi APs 110 may include transceivers for transmitting and/or receiving signals, for example, over a backbone and/or over an access interface. A transceiver may be implemented as a single integrated circuit (e.g., using a single ASIC or FPGA) or as a SOC that includes different modules for implementing the functionality of the transceiver.

An apparatus 11 may be implemented by a user device to which resources on the access interface are allocated and assigned, and thus any feature described herein with a user device may be implemented with a corresponding apparatus, such as the apparatus 11. The Wi-Fi AP 110 may further include a processor (e.g., such as the processor 12) and a memory (e.g., such as the memory 14), such that the apparatus 11 may also be embodied by an AP. The processor 12 may be used to execute the instructions 15 stored in the memory 14 and/or to store information in the memory 14, for example, such as the results of the executed instructions.

The apparatus 11 may be configured to function as the cloud network 105, APs 110, client devices 115, and/or other entities. As shown in Figure 11, the apparatus includes, is associated with, and/or is in communication with: a processor 12, a memory 14, and a communication interface 16. The processor 12 may be in communication with the memory device 14 via a bus for passing information among components of the apparatus 11. The memory device 14 may be non-transitory and may include, for example, one or more volatile and/or nonvolatile memories. In other words, for example, the memory device 14 may be an electronic storage device (e.g., a computer readable storage medium) comprising gates configured to store data (e.g., bits) that may be retrievable by a machine (e.g., a computing device like the processor 12). The memory device 14 may be configured to store information, data, content, applications, instructions, or the like for enabling the apparatus to carry out various functions in accordance with an example embodiment of the present disclosure (e.g., the instructions 15). For example, the memory device 14 could be configured to buffer input data for processing by the processor 12. Additionally or alternatively, the memory device 14 may be configured to store the instructions 15 for execution by the processor 12.

The instructions 15 may be comprised in a computer-readable medium or a non-transitory computer readable medium. A term "non-transitory", as used herein, is a limitation of the medium itself (e.g., tangible, not a signal) as opposed to a limitation on data storage persistency (e.g., random access memory (RAM) vs. read only memory (ROM)).

Figure 11 depicts an example of a simplified block diagram of an apparatus according to various embodiments of the present disclosure, whose implementation may differ from what is shown. The connections shown in Figure 11 are logical connections; the actual physical connections may be different. It is apparent to a person skilled in the art that the system typically comprises also other functions and structures than those shown in Figure 10.

The apparatus 11 may, in some embodiments, be embodied in various computing or communication devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present disclosure on a single chip or as a single system on a chip (SOC). As such, in some cases, a chip or chipset may constitute means for performing one or more operations for providing the functionalities described herein.

The processor 12 may be embodied in a number of different ways. For example, the processor 12 may be implemented by processing circuitry. For example, the processor 12 may be embodied as one or more of various hardware processing means such as a coprocessor, a microprocessor, a controller, a digital signal processor (DSP), a processing element with or without an accompanying DSP, or various other circuitry including integrated circuits such as, for example, an application specific integrated circuit (ASIC), a field programmable gate array (FPGA), a microcontroller unit (MCU), a hardware accelerator, a special-purpose computer chip, and/or the like. As such, in some embodiments, the processor 12 may include one or more processing cores configured to perform independently. A multi-core processor may enable multiprocessing within a single physical package. Additionally or alternatively, the processor 12 may include one or more processors configured in tandem via the bus to enable independent execution of instructions, pipelining and/or multithreading.

In an example embodiment, the processor 12 may be configured to execute the instructions 15 stored in the memory device 14 or otherwise accessible to the processor 12. Alternatively or additionally, the processor 12 may be configured to execute hard coded functionality. As such, whether configured by hardware or software methods, or by a combination thereof, the processor 12 may represent an entity (e.g., physically embodied in circuitry) capable of performing operations according to an embodiment of the present disclosure while configured accordingly. Thus, for example, when the processor 12 is embodied as an ASIC, FPGA, and/or the like, the processor 12 may be specifically configured hardware for conducting the operations described herein. Alternatively or additionally, as another example, when the processor 12 is embodied as an executor of instructions (e.g., instructions 15), the instructions may specifically configure the processor to perform the algorithms and/or operations described herein when the instructions are executed. However, in some cases, the processor 12 may be a processor of a specific device (e.g., an image or video processing system) configured to employ an embodiment of the present disclosure by further configuration of the processor by instructions for performing the algorithms and/or operations described herein. The processor 12 may include, among other things, a clock, an arithmetic logic unit (ALU), and/or logic gates configured to support operation of the processor 12.

The communication interface 16 may be a device and/or circuitry embodied in either hardware or a combination of hardware and software that is configured to receive and/or transmit data, including media content in the form of video or image files, one or more audio tracks, and/or the like. In this regard, the communication interface 16 may include, for example, an antenna (or multiple antennas) and supporting hardware and/or software for enabling communications with a wireless communication network. Additionally or alternatively, the communication interface 16 may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In some examples, the apparatus 11 may be an access point (AP) or a non-AP station (STA) (e.g., such as a client device) usable in a Wi-Fi network operating in accordance with wireless standards (e.g., IEEE 802.11 standards). For example, the apparatus 11 may be a terminal device, such as the STAs 115 of Figure 1. As another example, the apparatus 11 may be included in such a terminal device, for example, as a chipset configured to control the terminal device. As another example, the apparatus 11 may be a non-AP STA, such as the APs 110 of Figure 1. The apparatus 11 may be caused or configured to perform at least the method of Figures 5-10 and/or any one or more of the embodiments described.

In an embodiment, at least some of the processes described herein may be carried out by an apparatus comprising means for carrying out at least some of the described processes. Means for performing elements of the method as disclosed herein may include software and/or hardware components of the apparatus 11. For example, the at least one processor 12, the memory 14, and the instruction 15 form means for carrying out the method or methods as disclosed herein, and any of the embodiments thereof. As used herein the term "means" is to be construed in singular form, e.g., referring to a single element, or in plural form, e.g., referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though the present disclosure has been described above with reference to an example according to the accompanying drawings, it is clear that the present disclosure is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising:
means for switching from a Basic Service Set (BSS) primary channel to a Non-Primary Channel Access (NPCA) primary channel for communicating with an Access Point (AP), wherein the NPCA primary channel is associated with a mode of operation in which untriggered uplink (UL) transmission is not enabled; and
means for receiving, from the AP via the NPCA primary channel, an initial control frame (ICF) comprising a field indicating an NPCA duration that defines a minimum duration until switching from the NPCA primary channel to the BSS primary channel must occur.

2. The apparatus of claim 1, wherein:
the NPCA duration is equivalent to an Overlapping BSS (OBSS) Basic Network Allocation Vector (NAV) duration of an OBSS transmission that caused the switching from the BSS primary channel to the NPCA primary channel; and
the OBSS Basic NAV duration is signaled (i) via a list or array comprising OBSS Basic NAV durations for each of one or more OBSSs transmissions overlapping with the BSS primary channel, (ii) via a single value corresponding to a maximum OBSS Basic NAV duration of one or more OBSS Basic NAV durations of a respective one or more OBSS transmissions that overlap the BSS primary channel, or (iii) in association with a BSS color relative to the OBSS Basic NAV duration.

3. The apparatus of claim 1, wherein:
the NPCA duration is equivalent to a duration of a Physical Protocol Data Unit (PPDU) of an OBSS transmission that caused the switching from the BSS primary channel to the NPCA primary channel; and
the duration of the PPDU is signaled (i) via a list or array comprising durations of PPDUs of each of one or more OBSS transmissions overlapping with the BSS primary channel, (ii) via a single value corresponding to a maximum duration of one or more durations of PPDUs of each of one or more OBSS transmissions that overlap the BSS primary channel, or (iii) in association with a BSS color relative to the duration of the PPDU.

4. The apparatus of claim 1, wherein the NPCA duration is equivalent to a transmission opportunity (TXOP) duration that the AP is configured to reserve on the NPCA primary channel.

5. The apparatus of claim 4, wherein the NPCA duration is required to satisfy at least one of the following conditions: (i) the NPCA duration is less than or equivalent to an OBSS Basic NAV duration or a duration of a PPDU of an OBSS transmission that caused the switching from the BSS primary channel to the NPCA primary channel (ii) greater than or equivalent to a duration long enough to allow a Block Ack (BA) transmission for one or more PPDUs configured for transmission, or (iii) greater than or equivalent to a duration long enough to allow a TXOP return transmission, wherein the AP is operating Code-Time Division Multiple Access (C-TDMA) jointly with the NPCA.

6. The apparatus of claim 1, wherein the NPCA duration is equivalent to a duration of a service period in which a station (STA) is configured to acquire a TXOP and transmit for unrestricted and restricted target wake time (TWT).

7. The apparatus of claim 1, further comprising means for performing at least switching from the NPCA primary channel to the BSS primary channel based at least in part on a mode of operation associated with the NPCA or based at least in part on the NPCA duration.

8. The apparatus of claim 7, wherein:
switching from the NPCA primary channel to the BSS primary channel based at least in part on the NPCA duration comprises switching from the NPCA primary channel to the BSS primary channel (i) when or after the NPCA duration expires, or (ii) when or after a duration comprising the NPCA duration and an NPCA-Switching-Back-Delay duration expires; and
the NPCA duration is (i) an individual NPCA duration, or (ii) a greatest NPCA duration among a plurality of NPCA durations.

9. The apparatus of claim 1 further comprising means for performing at least transmitting, to the AP, an initial control response (ICR) frame comprising a field indicating an NPCA duration determined by the apparatus.

10. The apparatus of claim 9, wherein both the ICF and ICR comprise a field indicating an NPCA duration and the apparatus is configured to use the NPCA duration received within the ICF; or
wherein, both the ICF and ICR comprise a field indicating an NPCA duration and the apparatus is configured to use a greatest NPCA duration among the NPCA duration within the ICF and the NPCA duration within the ICR; or
wherein, both the ICF and ICR comprise a field indicating an NPCA duration and the apparatus is configured to use the NPCA duration received within the ICF in an instance in which the NPCA duration received within the ICF is less than or the same as the NPCA duration determined by the apparatus.

11. The apparatus of claim 1, wherein the NPCA duration is based at least in part on an NPCA mode of operation.

12. The apparatus of claim 1, wherein the apparatus is a non-AP STA.

13. A method comprising:
switching, via an apparatus, from a Basic Service Set (BSS) primary channel to a Non-Primary Channel Access (NPCA) primary channel for communicating with an Access Point (AP), wherein the NPCA primary channel is associated with a mode of operation in which untriggered uplink (UL) transmission is not enabled; and
receiving, via the apparatus and from the AP via the NPCA primary channel, an initial control frame (ICF) comprising a field indicating an NPCA duration that defines a minimum duration until switching from the NPCA primary channel to the BSS primary channel must occur.

14. An apparatus comprising:
means for switching from a Basic Service Set (BSS) primary channel to a Non-Primary Channel Access (NPCA) primary channel for communicating with a station (STA), wherein the NPCA primary channel is associated with a mode of operation in which untriggered uplink (UL) transmission is not enabled;
means for transmitting, to the STA via the NPCA primary channel, an initial control frame (ICF) comprising a field indicating an NPCA duration that defines a minimum duration until switching from the NPCA primary channel to the BSS primary channel must occur; and
means for switching, based on the NPCA duration, from the NPCA primary channel to the BSS primary channel for communicating with the STA.

15. The apparatus of claim 14, wherein the apparatus is an Access Point (AP).
